# EUROPÄISCHE PATENTSCHRIFT

(11) **EP 2 783 839 B1**
(45) Veröffentlichungstag und Bekanntmachung des Hinweises auf die Patenterteilung: **18.11.2015**
(21) Anmeldenummer: 14161836.3
(22) Anmeldetag: 26.03.2014
(51) Int. Cl.: B29C 70/50, B29C 70/54, B29C 70/20

(54) **Verfahren zur Herstellung eines endlosen Halbzeugs mit wengistens einer schräg verstärkten Schicht**
Method for manufacturing an endless semifinished product with at least one obliquely reinforced layer
Procédé de fabrication d'un produit semi-fini comprenant au moins une couche renforcée en oblique

(30) Priorität: 26.03.2013 DE 102013103049
(43) Veröffentlichungstag der Anmeldung: 01.10.2014
(73) Patentinhaber: F.A. Kümpers GmbH & Co. KG, 48429 Rheine (DE)
(72) Erfinder: Bonse, Rudolf, 48163 Münster (DE); Kümpers, Joan-Dirk, 48431 Rheine (DE)
(74) Vertreter: Schlief, Thomas P.

(56) Entgegenhaltungen:
- EP-A1- 1 712 346
- EP-A1- 1 884 351
- EP-A2- 0 927 629
- WO-A1-2008/120023

## Beschreibung

Die Erfindung betrifft ein Verfahren zur Herstellung eines endlosen Halbzeugs zur Herstellung von Formteilen, wobei das Halbzeug wenigstens eine schräg verstärkte Schicht aufweist, welche eine Polymermatrix und darin eingebettete Verstärkungsfasern aufweist, wobei die Verstärkungsfasern der wenigstens einen schräg verstärkten Schicht schräg zur Längsrichtung des Halbzeugs verlaufen.

Unter einem Formteil wird dabei ein Werkstück verstanden, welches nach seiner Fertigstellung in einer durch den Fertigungsprozess vorgegebenen strukturellen Gestalt verbleibt. Halbzeuge zu Herstellung von Formeilen sind dabei Vorprodukte, welche allein oder in Verbindung mit anderen Halbzeugen in ein Formwerkzeug, beispielsweise in eine Presse, eingelegt, geformt und endgültig verfestigt werden können, so dass das oder die Halbzeuge die durch das Formwerkzeug vorgegebene Form annehmen. Der Begriff "endlos" bedeutet hierbei, dass das Verfahren zur Herstellung des Halbzeugs so ausgelegt ist, dass das Halbzeug in Längsrichtung prinzipiell eine unbegrenzte Länge erreichen kann. So kann das Halbzeug kostengünstig und schnell hergestellt werden. Das zunächst endlose Halbzeug kann dann in zur Herstellung der Formteile geeignete Stücke zerlegt werden.

Bei einem bekannten Verfahren zur Herstellung von Formteilen werden zunächst Halbzeuge hergestellt, welche sowohl eine Polymermatrix als auch Verstärkungsfasern enthalten. Die Verstärkungsfasern weisen dabei eine höhere spezifische Zugfestigkeit als die Polymermatrix auf.

Durch die gegenseitigen Wechselwirkungen der Polymermatrix und der Verstärkungsfasern entsteht so ein Formteil, dessen mechanische Eigenschaften den Eigenschaften der beiden Komponenten überlegen sind. Insbesondere ergibt sich ein besonders gutes Verhältnis aus Festigkeit und Gewicht.

Da die Verstärkungsfasern vor allem hohe Zugkräfte aufnehmen können, kommt es in vielen Fällen darauf an, dass die Verstärkungsfasern in dem Halbzeug eine definierte Richtung aufweisen. Um Formteile herstellen zu können, welche in mehrere Richtungen zugstabil sind, ist es in vielen Fällen vorgesehen, dass das Halbzeug mehrere Schichten aufweist, in denen die Verstärkungsfasern jeweils unterschiedliche Ausrichtungen aufweisen. Dabei ist es in vielen Fällen von Vorteil, wenn die Schicht oder die Schichten jeweils parallel ausgerichtete Verstärkungsfasern aufweisen. Eine solche Schicht wird auch unidirektional verstärkte Schicht genannt. Dabei unterscheidet man zwischen längs verstärkten Schichten, auch 0°-Schichten, bei denen die Verstärkungsfasern parallel zur Längsrichtung des Halbzeugs verlaufen und schräg verstärkten Schichten, auch X°-Schichten, bei denen die Verstärkungsfasern schräg zur Längsrichtung des Halbzeugs verlaufen, wobei X den Wert des Winkels angibt, unter dem die Verstärkungsfaser die Längsrichtung schneiden. X ist dabei verschieden von Null.

Während die Herstellung von endlosen längs verstärkten Schichten verhältnismäßig einfach dadurch erfolgen kann, dass die Verstärkungsfasern aus einer Zuführvorrichtung abgezogen, parallelisiert und stabilisiert werden, bereitet die Herstellung von schräg verstärkten Schichten nach wie vor Probleme. So ist es zur Herstellung einer schräg verstärkten Schicht bekannt, mittels eines hin- und hergehenden Greifers einzeln abgelängte Segmente schräg zur Laufrichtung einer laufenden Unterlage abzulegen und dann die einzelnen Segmente gemeinsam zu stabilisieren. Selbst bei sorgfältiger Synchronisation der Bewegung des Greifers und der Bewegung der laufenden Unterlage weist die so hergestellte schräg verstärkte Schicht, insbesondere an den Übergängen der einzelnen Segmente, unerwünschte Inhomogenitäten bezüglich der Verteilung der Verstärkungsfasern auf. Zudem ist die Arbeitsgeschwindigkeit bei einem derartigen Verfahren stark begrenzt, da die Hin- und Herbewegung des Greifers notwendigerweise größer als die Breite der Schicht ist und der mit einer Hin- und Herbewegung des Greifers zu erzielende Längengewinn der Schicht durch die Breite der Segmente begrenzt ist.

Dokument WO 2008/120023 offenbart die Herstellung eines Halbzeugs wobei die Verstärkungsfasern einer schräg verstärkten Schicht schräg zur Längsrichtung des Halbzeugs verlaufen. Eine Vielzahl von Verstärkungsfasern ist mittels einer Zuführeinrichtung zu einer Schlauchform zugeführt, verfestigt und zerschnitten.

Aufgabe der Erfindung ist es, ein Verfahren zur Herstellung eines endlosen Halbzeugs zur Herstellung von Formteilen zu verbessern.

Die Aufgabe wird bei einem Verfahren der eingangs genannten Art dadurch gelöst, dass die wenigstens eine schräg verstärkte Schicht durch folgende Schritte fortlaufend hergestellt wird:
a) Zuführen einer Vielzahl von Verstärkungsfasern in ihrer Längsrichtung mittels einer Zuführeinrichtung zu einem Schlauchformer,
b) Formen der zugeführten Verstärkungsfasern zu einem Schlauch mittels des Schlauchformers, derart, dass die Verstärkungsfasern in Längsrichtung des Schlauchs verlaufen,
c) Verfestigen des die Verstärkungsfasern enthaltenden Schlauchs in seiner Umfangsrichtung mittels einer Verfestigungseinrichtung, derart, dass der Schlauch in seiner Form stabilisiert wird,
d) Zerschneiden des die Verstärkungsfasern enthaltenden und stabilisierten Schlauchs mittels einer Schlauchschneidevorrichtung, derart, dass wenigstens ein endloser Schnitt schräg zur Umfangsrichtung des Schlauchs erzeugt wird, so dass die schräg verstärkte Schicht fortlaufend geliefert wird.

In einem Schritt a) wird eine Vielzahl von Verstärkungsfasern in ihrer Längsrichtung mittels einer Zuführeinrichtung zu einem Schlauchformer geführt. Die Zuführeinrichtung kann hierbei die Vielzahl von Verstärkungsfasern in ihrer Längsrichtung in endloser Form liefern. Sie kann hierzu passive mechanische Faserhandhabungsmittel, wie Kämme, Ösen, Führungskanäle und dergleichen, aktive mechanische Faserhandhabungsmittel, wie Transportwalzen, Wellen und dergleichen, und/oder pneumatische Faserhandhabungsmittel, wie Saugeinrichtungen, Blaseinrichtungen und dergleichen, umfassen.

In einem Schritt b) werden die zugeführten Verstärkungsfasern mittels des Schlauchformers zu einem Schlauch geformt, so dass die Verstärkungsfasern in Längsrichtung des Schlauchs verlaufen. Unter einem Schlauch wird dabei eine hohlzylinderförmige Anordnung der Verstärkungsfasern verstanden. Der Schlauch weist bevorzugt einen kreisförmigen Querschnitt auf, weil so in Umfangsrichtung eine besonders gleichmäßige Dichte der Verstärkungsfasern erreicht werden kann. Auch der Schlauchformer kann hierzu passive mechanische Handhabungsmittel, wie Ösen, Führungskanäle und dergleichen, aktive mechanische Handhabungsmittel, wie Transportwalzen, Wellen und dergleichen, und/oder pneumatische Handhabungsmittel, wie Saugeinrichtungen, Blaseinrichtungen und dergleichen, umfassen.

Der Transport bzw. Vorschub des Schlauchs im gesamten System wird mittels an sich bekannter Transportsysteme realisiert. Beispielsweise erfolgt der Transport durch Riementriebe, die am inneren Umfang des Schlauches angreifen und insbesondere im Schlauchformer angeordnet sein können. Mehrere derartige Riementriebe können hintereinander versetzt vorgesehen sein. Auch ist alternativ oder zusätzlich der Einsatz von an sich bekannten Schlauchabzugssystemen möglich.

Nun wird in einem Schritt c) der die Verstärkungsfasern enthaltende Schlauch in seiner Umfangsrichtung mittels einer Verfestigungseinrichtung verfestigt, so dass der Schlauch in seiner Form stabilisiert wird.

Die Verfestigung erfolgt dabei so, dass in einem Schritt d) der die Verstärkungsfasern enthaltende und stabilisierte Schlauch mittels einer Schlauchschneidevorrichtung so geschnitten werden kann, dass wenigstens ein endloser Schnitt schräg zur Umfangsrichtung des Schlauchs erzeugt wird, so dass die schräg verstärkte Schicht fortlaufend geliefert wird. Schräg zur Umfangsrichtung bedeutet hierbei, dass der Schnitt unter einem von null verschiedenen Winkel gegenüber der Umfangsrichtung erfolgt, beispielsweise in einem Winkel von 45°. Prinzipiell sind alle schrägen Winkel gegenüber der Umfangsrichtung möglich. Auch Steigungsänderungen des Schnitts entlang der Schlauchlängsrichtung sind ohne weiteres möglich. Bevorzugt sind Endlosschnitte mit einem Winkel von 10° bis 80°, besonders bevorzugt im Winkelbereich zwischen 30° und 60°, beispielsweise 45°.

Unter dem Begriff "endloser Schnitt" wird verstanden, dass der Schlauch nicht entlang seiner Umfangsrichtung in einzelne Stücke geschnitten wird, sondern der Schlauch kontinuierlich während seines Transports in Längsrichtung geschnitten wird, so dass ein zusammenhängendes, langgestrecktes Halbzeug erhalten werden kann, solange der Schlauch der Schneideinheit zugeführt wird.

Der endlose Schnitt kann dabei durch mechanisches Schneiden, durch Laser, mittels eines Fluidstrahls, beispielsweise durch einen Wasserstrahl oder einen Luftstrahl oder durch ein anderes Verfahren erzeugt werden. Der endlose Schnitt kann dabei mittels einer in Bezug auf den Schlauch in Umfangsrichtung rotierenden Schneideinheit erfolgen, wobei sich durch die Überlagerung der rotatorischen Bewegung der Schneideinrichtung und der Bewegung des Schlauchs in seiner Längsrichtung ein schraubenlinienförmiger Schnitt ergibt. Hierdurch wird eine endlose Schicht eines Halbzeugs erzeugt, bei dem die Verstärkungsfasern schräg zur Längsrichtung des Halbzeugs verlaufen. Der Winkel, unter dem die Verstärkungsfasern in Bezug auf die Längsrichtung der Schicht verlaufen ergibt sich dabei aus dem Steigungswinkel des schraubenlinienförmigen Schnitts. Dabei gilt, je kleiner der Steigungswinkel, desto größer ist der Winkel, unter dem die Verstärkungsfasern in Bezug auf die Längsrichtung der Schicht verlaufen.

Das erfindungsgemäße Verfahren ermöglicht die fortlaufende Herstellung eines endlosen Halbzeugs mit einer schräg verstärkten Schicht, welches eine homogene Verteilung und eine parallele Ausrichtung der Verstärkungsfasern aufweist. Hierbei ist eine hohe Arbeitsgeschwindigkeit möglich, da keine Komponenten erforderlich sind, welche eine hin- und hergehende, also changierende, Bewegung ausführen müssen.

Gemäß einer bevorzugten Weiterbildung der Erfindung werden die Schritte a), b), c) und d) bei fortlaufend bewegten Verstärkungsfasern durchgeführt. Das bedeutet, dass die Verstärkungsfasern während der Durchführung des Verfahrens kontinuierlich ohne Pausen von Schritt zu Schritt geführt werden. Dabei weist die Bewegungsgeschwindigkeit der Verstärkungsfasern bei jedem der Schritte a), b), c), d) zumindest annähernd denselben Wert auf, um so einen Materialstau bzw. einen unerwünschten Verzug der Verstärkungsfasern zu vermeiden. Auf diese Weise wird eine aufwändige zwischenzeitliche Lagerung der Verstärkungsfasern vermieden und das Halbzeug kann mit hoher Geschwindigkeit hergestellt werden.

Nach einer bevorzugten Weiterbildung der Erfindung wird im Schritt c) die Verfestigung durch Verkleben der Verstärkungsfasern, durch Verschmelzen der Verstärkungsfasern, durch Befeuchten der Verstärkungsfasern, durch Begasen der Verstärkungsfasern, durch Vernähen der Verstärkungsfasern und/oder durch Aufbringen einer, insbesondere textilen, Verstärkungsschicht durchgeführt.

Das Verkleben kann durch Kaltkleben, bei dem ein Kleber bei Raumtemperatur eine stoffschlüssige adhäsive Verbindung zwischen den Verstärkungsfasern erzeugt, und/oder durch Heißkleben, bei dem ein Kleber erhitzt wird und beim Abkühlen eine stoffschlüssige adhäsive Verbindung zwischen den Verstärkungsfasern erzeugt, erfolgen.

Sofern die Verstärkungsfasern zum Verschweißen geeignet sind, kann die Verfestigung ebenso durch Verschweißen erfolgen, wobei die Verstärkungsfasern zumindest teilweise bis zur Verflüssigungsgrenze erhitzt werden, so dass sie beim Erstarren fest miteinander verbunden sind.

Ebenso kann die Verfestigung durch Befeuchten der Verstärkungsfasern erfolgen, in dem eine Flüssigkeit auf die Verstärkungsfasern aufgetragen wird. Beispielsweise ist es möglich, mittels einer geeigneten Flüssigkeit eine auf den Verstärkungsfasern anhaftende Avivage zumindest teilweise zu verflüssigen, so dass beim anschließenden Trocknen der Avivage eine Verbindung der Verstärkungsfasern erreicht wird.

Weiterhin kann das Verfestigen durch Begasen der Verstärkungsfasern erfolgen, in dem ein geeignetes Gas auf die Verstärkungsfasern aufgebracht wird. So ist es auch möglich, mittels eines geeigneten Gases eine auf den Verstärkungsfasern anhaftende Avivage zumindest teilweise zu verflüssigen, so dass beim anschließenden Verfestigen der Avivage eine Verbindung der Verstärkungsfasern erreicht wird.

Auch kann die Verfestigung durch Vernähen durchgeführt werden, worunter verstanden wird, dass die Verstärkungsfasern mittels eines Fadens zusammengehalten werden.

Darüber hinaus kann das Verfestigen auch durch Aufbringen einer, insbesondere textilen, Verstärkungsschicht erfolgen.

Gemäß einer zweckmäßigen Weiterbildung der Erfindung umfassen die zugeführten Verstärkungsfasern Glasfasern, Kohlenstofffasern und/oder Aramidfasern. Derartige Materialien erfüllen die Anforderungen an Verstärkungsfasern, insbesondere hinsichtlich ihrer Festigkeit, sind weiterhin preiswert und gut verarbeitbar. Es sind aber auch andere Hochmodulfasern möglich. Gemäß einer zweckmäßigen Weiterbildung der Erfindung sind die zugeführten Verstärkungsfasern mit thermoplastischen Matrixfasern innig vermischt oder mit thermoplastischen Matrixfasern ummantelt. Auf diese Weise entsteht eine Schicht eines Halbzeugs, welches sowohl die Verstärkungsfasern als auch die Polymermatrix in Form von thermoplastischen Matrixfasern enthält. Hierdurch vereinfacht sich das Verfahren, da die Polymermatrix nicht nachträglich eingebracht werden muss. Das spätere Herstellen des Formteils kann dann in einfacher Weise so erfolgen, dass das Halbzeug in einer Formeinrichtung bis zur Schmelze der thermoplastischen Matrixfasern erhitzt wird, so dass sich das Halbzeug der Formeinrichtung exakt anpassen kann, und dass sich das Halbzeug beim Abkühlen verfestigt, so dass das fertige Formteil entsteht.

Unter einer innigen Mischung von Fasern verschiedener Arten wird dabei eine solche Mischung verstanden, bei der auf der Ebene der Einzelfasern eine im Wesentlichen homogene Mischung vorliegt. Das bedeutet, dass die Fasern der verschiedenen Arten so durchmischt sind, dass Gruppierungen von ausschließlich gleichartigen Fasern im Wesentlichen nicht mehr auftreten. Durch die Verwendung von innigen Mischungen bzw. von mit thermoplastischen Matrixfasern ummantelten Verstärkungsfasern ist sichergestellt, dass in dem Halbzeug die thermoplastischen Matrixfasern und die Verstärkungsfasern durchmischt sind. Auf diese Weise kann erreicht werden, dass die Verstärkungsfasern beim Aufschmelzen der thermoplastischen Matrixfasern vollständig benetzt werden, so dass im späteren Formteil die Wechselwirkungen zwischen thermoplastischer Matrix und den Verstärkungsfasern durch eine verbesserte stoffschlüssige Verbindung maximiert werden, so dass ein mechanisch hoch belastbares Formteil mit gleichzeitig geringem Gewicht geschaffen ist.

Gemäß einer zweckmäßigen Weiterbildung der Erfindung umfassen die thermoplastischen Matrixfasern Polyurethanfasern (insbesondere Fasern aus PU), Polyamidfasern (insbesondere Fasern aus PA), Polyetherketonfasern (insbesondere Fasern aus PAEK sowie aus seinen Abkömmlingen, insbesondere PEEK, PEK, PEEEK, PEEKEK, PEKK), Polypropylenfasern (insbesondere Fasern aus PP), Acrynitril-Butadien-Styrol-Fasern (insbesondere Fasern aus ABS) und/oder Polyesterfasern (insbesondere Fasern aus PES sowie aus seinen Abkömmlingen, insbesondere PBT, PC, PET, PEN). Derartige Materialien erfüllen insbesondere die Anforderungen hinsichtlich ihrer Festigkeit, sind preiswert und gut verarbeitbar.

Gemäß einer zweckmäßigen Weiterbildung der Erfindung umfassen die zugeführten Verstärkungsfasern verdrehte Stapelfasern. Formteile, welche Verstärkungsfasern in Form von verdrehten Stapelfasern enthalten, weisen quer zur Hauptrichtung der Verstärkungsfasern eine höhere Festigkeit auf, als solche Formteile, welche mit Verstärkungsfasern in Form von Endlosfasern, auch Filamente genannt, gefertigt sind. Insbesondere kann so bei Formteilen, welche mehrere Schichten umfassen, der Zusammenhalt der einzelnen Schichten verbessert werden.

Zudem weisen Hybridgarne mit Stapelfasern einen geringeren Hohlraumanteil als Hybridgarne mit Endlosfasern auf, was die Gefahr von unerwünschten Lufteinschlüssen beim Formen des Formteils, also beim Konsolidieren des textilen Flächengebildes, verringert. Auf diese Weise wird die Festigkeit des Formteils verbessert.

Weiterhin sind aus Stapelfasern gefertigte Halbzeuge besser drapierbar als ihre Pendants aus Filamenten. Hierdurch erleichtert sich das faltenfreie Einlegen der textilen Flächengebilde in das Formwerkzeug, wobei gleichzeitig die Gefahr einer Beschädigung der Struktur des Halbzeugs verringert wird. Auf diese Weise können die Herstellkosten des Formteils gesenkt werden. Zudem können so aus Halbzeugen komplexer geformte Formteile hergestellt werden, da sich die Halbzeuge besser an die Kontur des Formwerkzeugs anlegen lassen.

Weiterhin wird durch die Verwendung von Stapelfasern die Gefahr verringert, dass die Fasern bei der Weiterverarbeitung, insbesondere beim Drapieren, geknickt werden. Dies wiederum ist vorteilhaft für die Festigkeit des späteren Formteils.

Gemäß einer zweckmäßigen Weiterbildung der Erfindung umfassen die zugeführten Verstärkungsfasern Endlosfasern. Formteile, welche Verstärkungsfasern in Form von Endlosfasern enthalten, weisen längs zur Hauptrichtung der Verstärkungsfasern eine höhere Festigkeit auf, als solche Formteile, welche mit Verstärkungsfasern in Form von verdrehten Stapelfasern gefertigt sind. Wenn nun die Verstärkungsfasern so angeordnet werden, dass deren Längsrichtung zumindest abschnittsweise einer Hauptbelastungsrichtung des späteren Formteils entspricht, so kann das Formteil mechanischen Belastungen besser standhalten. Auf diese Weise kann das Verhältnis von mechanischer Belastbarkeit und Gewicht des Formteils verbessert werden.

Nach einer zweckmäßigen Weiterbildung der Erfindung werden die zugeführten Verstärkungsfasern in Form wenigstens eines längs verstärkten flächigen Textilmaterials zugeführt. Unter einem längs verstärkten textilen Flächengebilde wird dabei ein Gebilde verstanden, welches Verstärkungsfasern aufweist, welche in Längsrichtung des Gebildes verlaufen und quer dazu miteinander verbunden sind. In diesem Fall kann der Schlauch dadurch geformt werden, dass das flächige Textilmaterial ein- oder beidseitig eingeschlagen wird, so dass die seitlichen Ränder des flächigen Textilmaterials zusammengeführt werden. Das Verfestigen des Schlauchs kann sich in diesem Fall auf den Bereich der zusammengeführten Ränder beschränken. Um eine gleichmäßige Wandstärke des Schlauchs zu erhalten, können die beiden Ränder ohne Überlappung zusammengeführt und im Schritt c) miteinander verbunden werden. Denkbar ist aber auch, dass das flächige Textilmaterial an seinen Rändern dünner ist als in seinem mittleren Bereich. Hier kann dann eine Überlappung der Ränder vorgesehen sein, was das Verbinden der Ränder im Schritt c) vereinfachen kann. Beispielsweise können die Ränder durch Spreizen und Doublieren, also Übereinanderlegen, verbunden werden.

Gemäß einer zweckmäßigen Weiterbildung wird eine Überlappung von mehreren nebeneinander verlaufenden Bahnen von Verstärkungsfasern, beispielsweise vorliegend als mehrere Bahnen von Textilmaterial, vor oder bei der Schlauchbildung in Längsrichtung des Schlauchs konstant eingestellt. Hierbei ist des Weiteren bevorzugt, wenn die Schlauchdicke über den Schlauchumfang im Wesentlichen konstant ist. Dies kann beispielsweise dadurch erreicht werden, dass eine Textilmaterial-Bahn mit einer 50%igen Überlappung auf oder unter eine benachbarte Textilmaterial-Bahn gelegt wird. Es stoßen bei einer solchen Anordnung also immer zwei Textilmaterial-Bahnen Kante auf Kante aneinander an, während sich über oder unter diesen beiden Textilmaterial-Bahnen eine weitere Textilmaterial-Bahn befindet. Die Dicke eines derartigen Schlauchs wird also stets durch zwei übereinander liegende Textilmaterial-Bahnen gebildet.

Nach einer zweckmäßigen Weiterbildung der Erfindung werden die zugeführten Verstärkungsfasern in Form von diskreten Garnen zugeführt. Auf diese Weise müssen die Verstärkungsfasern in Schritt c) zwar am ganzen Umfang des Schlauchs verfestigt werden, allerdings können so Ungleichmäßigkeiten im Bereich der aneinandergefügten Ränder eines aus einem textilen Flächengebildes gebildeten Schlauch vermieden werden, was die Gleichmäßigkeit der Polymermatrix und/oder der Verstärkungsfasern im späteren Halbzeug verbessert.

Gemäß einer zweckmäßigen Weiterbildung der Erfindung wird im Anschluss an Schritt d) die schräg verstärkte Schicht mittels einer Wickeleinrichtung aufgewickelt. Auf diese Weise kann das Halbzeug leicht gelagert und transportiert werden.

Gemäß einer vorteilhaften Weiterbildung der Erfindung wird ein Halbzeug mit einer variablen Breite hergestellt. Solche Halbzeuge können die Fertigungsprozesse, beispielsweise im Karosseriebau, wesentlich vereinfachen, da insbesondere aufwändige Schneidprozesse zum Zuschneiden des Halbzeugs auf die gewünschte Form weniger werden bzw. ganz entfallen können.

Eine solche Breitenvarianz kann gemäß einer Ausführungsform der Erfindung dadurch erhalten werden, dass der Schlauch mit entlang seiner Längsrichtung unterschiedlichen Durchmessern der Schlauchschneideeinrichtung zugeführt wird. Durch das Zerschneiden eines Schlauchs mit sich änderndem Durchmesser bzw. sich änderndem Umfang wird durch den schrägen endlosen Schnitt ein Halbzeug mit einer Breitenvarianz erhalten.

Eine diesbezügliche vorteilhafte Ausführungsform sieht vor, dass die unterschiedlichen Durchmesser erhalten werden, indem die Verstärkungsfasern über ihre Gesamtbreite, beispielsweise eingebettet in eine Polymermatrix, in entlang der besagten Längsrichtung unterschiedlichen Breiten dem Schlauchformer zugeführt werden. Hierdurch werden - bei gleich bleibender Überlappung der Ränder der Polymermatrix im Zuge der Schlauchformung - entsprechend unterschiedliche Schlauchdurchmesser aufgrund der unterschiedlich breiten Polymermatrixabschnitten erhalten. Das schräge Zerschneiden liefert dann die gewünschte Breitenvarianz des resultierenden Halbzeugs.

Bei einer alternativen Ausführungsform, die auch ohne weiteres mit der vorgenannten kombiniert werden kann, werden die unterschiedlichen Durchmesser des Schlauchs dadurch erhalten, dass im Anschluss an die Schlauchbildung, aber vor dessen Verfestigung, beispielsweise eine bekannte Aufblaseinrichtung angeordnet ist, die gegen die Innenfläche des geformten Schlauches wirkt. Hierdurch wird ein Schlauch mit unterschiedlichen Durchmessern in dessen Verlaufsrichtung bzw. Längserstreckung erhalten, der anschließend verfestigt wird. Durch den schrägen Endlosschnitt wird wiederum ein breitenvariables Halbzeug erhalten. Alternativ oder zusätzlich zu einer Aufblaseinrichtung kann für eine derartige Schlauchformung eine Unterdruckeinrichtung eingesetzt werden, mit dem ein Schlauchabschnitt mit geringerem Durchmesser durch Komprimierung in Radialrichtung realisiert werden kann. Auch ist es bekannt, einen Ringformer zur Herstellung eines Schlauches mit in Längsrichtung variierendem Durchmesser einzusetzen.

Gemäß einer weiteren Alternative können mit Hilfe von einem oder mehreren zusätzlichen Gattern von einer oder von beiden Seiten zusätzlich Verstärkungsfasern temporär, d.h. mit definierten Längen, zugeführt werden, bevor der Schlauch gebildet wird. Hier können bekanntermaßen thermoplastische Mitläufer Verwendung finden. Auch ist der Einsatz von Transportvorrichtungen möglich, mit denen eine temporäre, d.h. unterbrochene, Zufuhr von Verstärkungsfasern realisiert werden kann.

Eine weitere Alternative sieht vor, dass die Verstärkungsfasen, beispielsweise eingebettet in eine Polymermatrix, in einheitlicher Breite in Richtung des Schlauchformers geführt werden, aber vor Eintritt in den Schlauchformer an einem oder beiden Rändern geschnitten werden, womit eine Polymermatrix variierender Breite in den Schlauchformer eingeführt wird.

Gemäß einem weiteren vorteilhaften, alternativen Verfahren zum Herstellen eines breitenvariablen Halbzeugs wird der wenigstens eine Schnitt, der schräg zur Umfangsrichtung des Schlauchs angesetzt wird, mit unterschiedlichen Steigungswinkeln erzeugt. Diese Variante hat u.a. den Vorteil, dass sie maschinenseitig relativ einfach zu realisieren ist. Beispielsweise wird durch Abbremsen bzw. Beschleunigen des Schlauchs beim Zuführen zur Schlauchschneidevorrichtung - bei unverändert operierender Schneideinheit - ein variabler Steigungswinkel erhalten, der zu einem Halbzeug mit variabler Breite führt. Alternativ oder zusätzlich kann die Schneideinheit, falls sie rotatorisch ausgebildet ist, mit unterschiedlicher Rotationsgeschwindigkeit umlaufen, wodurch ebenfalls ein variabler Steigungswinkel realisiert wird.

Verschiedene Kombinationen der oben genannten Möglichkeiten zur Herstellung eines breitenvariablen Halbzeugs sind ohne Weiteres realisierbar. Insbesondere können durch Einstellung der Durchmesser und der Durchmesseränderungen sowie dem Steigungswinkel des Schnitts unterschiedlichste Geometrien des Halbzeugs realisiert werden.

Auch können anstelle einer Polymermatrix mit eingebetteten Verstärkungsfasern diskrete Garne dem Schlauchformer zugeführt werden, wobei sich auch mit den diskreten Garnen die oben genannten Möglichkeiten zur Herstellung eine breitenvariablen Halbzeugs realisierten lassen.

Nach einer zweckmäßigen Weiterbildung der Erfindung wird Anschluss an Schritt d) die fortlaufend gelieferte schräg verstärkte Schicht mit einer oder mehreren weiteren zeitgleich fortlaufend gelieferten Schichten mittels einer Verbindungseinrichtung flächig verbunden. Hierdurch ist es möglich, in einer Produktionslinie mehrschichtige Halbzeuge herzustellen, ohne die fortlaufend gelieferte schräg verstärkte Schicht zwischenzeitlich lagern zu müssen.

Gemäß einer zweckmäßigen Weiterbildung der Erfindung umfassen die weiteren fortlaufend geleiferten Schichten eine weitere schräg verstärkte Schicht, wobei vorzugsweise die Faserorientierung der schräg verstärkten Schicht von der Faserorientierung der weiteren schräg verstärkten Schicht abweicht. Durch die Verwendung von mehreren Schichten kann eine höhere Biegesteifigkeit beim fertigen Formteil erreicht werden. Wenn die verschiedenen schräg verstärkten Schichten unterschiedliche Faserorientierungen aufweisen, kann zudem erreicht werden, dass das fertige Formteil in mehreren Richtungen zugfest ist.

Gemäß einer zweckmäßigen Weiterbildung der Erfindung umfassen die weiteren fortlaufend gelieferten Schichten eine längs verstärkte Schicht, welche von einer Vorrichtung zur fortlaufenden Lieferung einer längs verstärkten Schicht fortlaufend geliefert wird. Durch die Verwendung von mehreren Schichten kann eine höhere Biegesteifigkeit beim fertigen Formteil erreicht werden. Wenn die schräg verstärkte Schicht mit einer längs verstärkten Schicht kombiniert wird, kann zudem erreicht werden, dass das fertige Formteil in mehreren Richtungen zugfest ist.

Gemäß einer zweckmäßigen Weiterbildung der Erfindung wird der Schlauch während des Schritts d) um seine Längsachse gedreht. In diesem Fall kann der endlose Schnitt mit einer feststehenden Schneideinheit erzeugt werden und das Halbzeug kann in einer Ebene aus der Schneidvorrichtung abgezogen werden. Hierdurch erleichtert sich sowohl ein gegebenenfalls vorgesehenes Aufwickeln des Halbzeugs als auch ein gegebenenfalls vorgesehenes Verbinden der schräg verstärkten Schicht mit weiteren fortlaufend gelieferten Schichten.

Weiterhin betrifft die Erfindung eine Vorrichtung zur Durchführung eines Verfahrens, insbesondere nach einem der vorstehenden Ansprüche, zur Herstellung eines endlosen Halbzeugs zur Herstellung von Formteilen, wobei das Halbzeug wenigstens eine schräg verstärkte Schicht aufweist, welche eine Polymermatrix und darin eingebettete Verstärkungsfasern aufweist, wobei die Verstärkungsfasern der wenigstens einen schräg verstärkten Schicht schräg zur Längsrichtung des Halbzeugs verlaufen.

Bei der erfindungsgemäßen Vorrichtung ist vorgesehen, dass sie zum fortlaufenden Herstellen der wenigstens einen schräg verstärkten Schicht folgende Bestandteile aufweist:
eine Zuführeinrichtung zum Zuführen einer Vielzahl von Verstärkungsfasern in ihrer Längsrichtung zu einem Schlauchformer, wobei der Schlauchformer zum Formen der zugeführten Verstärkungsfasern zu einem Schlauch ausgebildet ist, derart, dass die Verstärkungsfasern in Längsrichtung des Schlauchs verlaufen,
eine Verfestigungseinrichtung zum Verfestigen des die Verstärkungsfasern enthaltenden Schlauchs in seiner Umfangsrichtung, derart, dass der Schlauch in seiner Form stabilisiert ist und
eine Schlauchschneidevorrichtung zum Zerschneiden des die Verstärkungsfasern enthaltenden Schlauchs, derart, dass wenigstens ein endloser Schnitt schräg zur Umfangsrichtung des Schlauchs erzeugbar ist, so dass die schräg verstärkte Schicht fortlaufend entsteht.

Die erfindungsgemäße Vorrichtung ermöglicht eine effiziente Durchführung des erfindungsgemäßen Verfahrens.

Aus- und Weiterbildungen der erfindungsgemäßen Vorrichtung sind bei der Beschreibung des beanspruchten Verfahrens erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: ein erstes Ausführungsbeispiel einer erfindungsgemäßen Vorrichtung in einer schematischen Seitenansicht,
- **Figur 2**: eine schematische Aufsicht auf die erfindungsgemäße Vorrichtung der Figur 1,
- **Figur 3**: ein zweites Ausführungsbeispiel einer erfindungsgemäßen Vorrichtung in einer schematischen Seitenansicht,
- **Figur 4**: eine schematische Aufsicht auf die erfindungsgemäße Vorrichtung der Figur 3,
- **Figur 5**: ein drittes Ausführungsbeispiel einer erfindungsgemäßen Vorrichtung in einer schematischen Aufsicht,
- **Figur 6**: ein viertes Ausführungsbeispiel einer erfindungsgemäßen Vorrichtung in einer schematischen Aufsicht,
- **Figur 7**: das dritte Ausführungsbeispiel mit einer schematischen Darstellung der mittels eines Schnitts durch einen Übergangsbereich zwischen zwei verschiedenen Schlauchdurchmessern erhaltenen Halbzeuggeometrie,
- **Figur 8**: ein fünftes Ausführungsbeispiel einer erfindungsgemäßen Vorrichtung in einer schematischen Aufsicht (Ausschnitt), und
- **Figur 9**: ein sechstes Ausführungsbeispiel einer erfindungsgemäßen Vorrichtung in einer schematischen Aufsicht.

In den folgenden Figuren sind einander entsprechende Teile mit denselben Bezugszeichen versehen. Dabei sind nur diejenigen Bestandteile einer Vorrichtung mit Bezugszeichen versehen und erläutert, welche für das Verständnis der Erfindung erforderlich sind. Es versteht sich von selbst, dass die erfindungsgemäße Vorrichtung weitere Teile und Baugruppen umfassen kann.

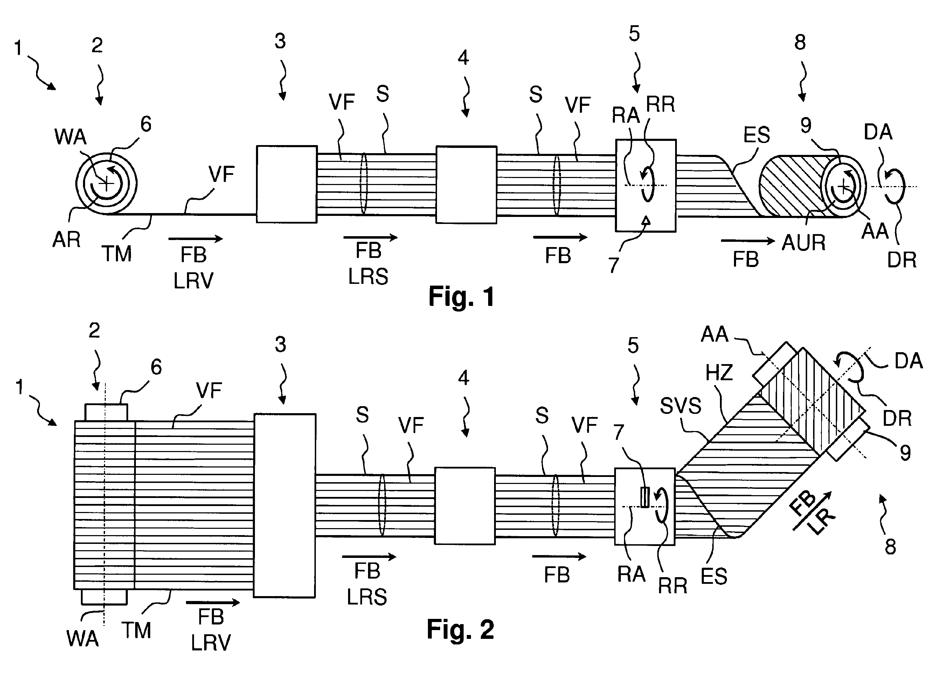

Die Figuren 1 und 2 zeigen ein erstes Ausführungsbeispiel einer erfindungsgemäßen Vorrichtung 1 zur Durchführung eines Verfahrens zur Herstellung eines endlosen Halbzeugs HZ zur Herstellung von Formteilen, wobei das Halbzeug HZ wenigstens eine schräg verstärkte Schicht SVS aufweist, welche eine Polymermatrix und darin eingebettete Verstärkungsfasern VF aufweist, wobei die Verstärkungsfasern VF der wenigstens einen schräg verstärkten Schicht SVS schräg zur Längsrichtung LR des Halbzeugs HZ verlaufen, in einer schematischen Seitenansicht und in einer schematischen Aufsicht.

Die erfindungsgemäße Vorrichtung 1 weist zum fortlaufenden Herstellen der wenigstens einen schräg verstärkten Schicht SVS folgende Bestandteile auf: Eine Zuführeinrichtung 2 zum Zuführen einer Vielzahl von Verstärkungsfasern VF in ihrer Längsrichtung LRV zu einem Schlauchformer 3, wobei der Schlauchformer 3 zum Formen der zugeführten Verstärkungsfasern VF zu einem Schlauch S ausgebildet ist (die Schlauchform ist in den Figuren der Anschaulichkeit halber als gestricheltes Oval angedeutet), derart, dass die Verstärkungsfasern VF in Längsrichtung LRS des Schlauchs S verlaufen, eine Verfestigungseinrichtung 4 zum Verfestigen des die Verstärkungsfasern VF enthaltenden Schlauchs S in seiner Umfangsrichtung, derart, dass der Schlauch S in seiner Form stabilisiert ist und eine Schlauchschneidevorrichtung 5 zum Zerschneiden des die Verstärkungsfasern VF enthaltenden Schlauchs S, derart, dass wenigstens ein endloser Schnitt ES schräg zur Umfangsrichtung des Schlauchs S erzeugbar ist, so dass die schräg verstärkte Schicht SVS fortlaufend entsteht.

In einem Schritt a) wird eine Vielzahl von Verstärkungsfasern VF in ihrer Längsrichtung LRV mittels der Zuführeinrichtung 2 zu dem Schlauchformer 3 geführt. Die Zuführeinrichtung 2 kann hierbei die Vielzahl von Verstärkungsfasern VF in ihrer Längsrichtung LRV in endloser Form liefern. Sie kann hierzu nicht gezeigte passive mechanische Faserhandhabungsmittel, wie Kämme, Ösen, Führungskanäle und dergleichen, aktive mechanische Faserhandhabungsmittel, wie Transportwalzen, Wellen und dergleichen, und/oder pneumatische Faserhandhabungsmittel, wie Saugeinrichtungen, Blaseinrichtungen und dergleichen, umfassen.

In einem Schritt b) werden die zugeführten Verstärkungsfasern VF mittels des Schlauchformers 3 zu einem Schlauch S geformt, so dass die Verstärkungsfasern VF in Längsrichtung LRS des Schlauchs S verlaufen. Unter einem Schlauch S wird dabei eine hohlzylinderförmige Anordnung der Verstärkungsfasern VF verstanden. Der Schlauch S weist bevorzugt einen kreisförmigen Querschnitt auf, weil so in Umfangsrichtung eine besonders gleichmäßige Dichte der Verstärkungsfasern VF erreicht werden kann. Auch der Schlauchformer 3 kann hierzu nicht gezeigte passive mechanische Handhabungsmittel, wie Ösen, Führungskanäle und dergleichen, aktive mechanische Handhabungsmittel, wie Transportwalzen, Wellen und dergleichen, und/oder pneumatische Handhabungsmittel, wie Saugeinrichtungen, Blaseinrichtungen und dergleichen, umfassen.

Der Schlauch S wird mittels an sich bekannter und daher hier nicht dargestellter Transportsysteme vorgeschoben. Beispielsweise erfolgt durch der Transport durch Riemen, die an der Schlauchinnenseite angreifen und insbesondere im Schlauchformer 3 angeordnet sein können. Mehrere derartige Riementriebe können an in Schlauchrichtung versetzten Abschnitten vorgesehen sein. Auch ist alternativ oder zusätzlich der Einsatz von an sich bekannten Schlauchabzugssystemen möglich.

In einem Schritt c) wird der die Verstärkungsfasern VF enthaltende Schlauch S in seiner Umfangsrichtung mittels einer Verfestigungseinrichtung 4 verfestigt, so dass der Schlauch S in seiner Form stabilisiert wird. Hier ist ebenfalls der Einsatz von Transport- und/oder Abzugssystemen für die Vorwärtsbewegung des Schlauches zweckmäßig.

Die Verfestigung erfolgt dabei so, dass in einem Schritt d) der die Verstärkungsfasern VF enthaltende und stabilisierte Schlauch S mittels einer Schlauchschneidevorrichtung 5 so geschnitten werden kann, dass wenigstens ein endloser Schnitt ES schräg zur Umfangsrichtung des Schlauchs S erzeugt wird, so dass die schräg verstärkte Schicht SVS fortlaufend geliefert wird. Schräg zur Umfangsrichtung bedeutet hierbei, dass der Schnitt ES unter einem von null verschiedenen Winkel gegenüber der Umfangsrichtung erfolgt. Der endlose Schnitt ES kann dabei durch mechanisches Schneiden, durch Laser, mittels eines Fluidstrahls, beispielsweise durch einen Wasserstrahl oder einen Luftstrahl oder durch ein anderes Verfahren erzeugt werden. Der endlose Schnitt ES erfolgt dabei im Ausführungsbeispiel der Figuren 1 und 2 mittels einer in Bezug auf den Schlauch S in Umfangsrichtung in einer Rotationsrichtung RR um eine Rotationsachse RA rotierenden Schneideinheit 7, wobei sich durch die Überlagerung der rotatorischen Bewegung der Schneideinrichtung 7 und der fortlaufenden Bewegung FB des Schlauchs S in seiner Längsrichtung LRS ein schraubenlinienförmiger Schnitt ergibt. Hierdurch wird eine endlose Schicht eines Halbzeugs HZ erzeugt, bei dem die Verstärkungsfasern VF schräg zur Längsrichtung LR des Halbzeugs HZ verlaufen. Der Winkel, unter dem die Verstärkungsfasern VF in Bezug auf die Längsrichtung LR der Schicht SVS verlaufen, ergibt sich dabei aus dem Steigungswinkel des schraubenlinienförmigen Schnitts ES. Dabei gilt, je kleiner der Steigungswinkel, desto größer ist der Winkel unter dem die Verstärkungsfasern VF in Bezug auf die Längsrichtung LRS der Schicht SVS verlaufen.

Das erfindungsgemäße Verfahren und die erfindungsgemäße Vorrichtung ermöglichen die fortlaufende Herstellung eines endlosen Halbzeugs HZ mit einer schräg verstärkten Schicht SVS, welches eine homogene Verteilung und eine parallele Ausrichtung der Verstärkungsfasern VF aufweist. Hierbei ist eine hohe Arbeitsgeschwindigkeit möglich, da keine Komponenten erforderlich sind, welche eine hin- und hergehende, also changierende Bewegung ausführen müssen.

Gemäß dem Ausführungsbeispiel der Figuren 1 und 2 wird im Anschluss an Schritt d) die schräg verstärkte Schicht SVS mittels einer Wickeleinrichtung 8 aufgewickelt. Auf diese Weise kann das Halbzeug HZ leicht gelagert und transportiert werden. Die Wickeleinrichtung 8 weist eine Aufwickelwalze 9 auf, welche in einer Aufwickelrichtung AUR um eine Aufwickelachse AA rotiert, um so die schräg verstärkte Schicht SVS aufzuwickeln. Um ein Verdrillen der schräg verstärkten Schicht SVS zu verhindern, rotiert die Aufwickelwalze 9 zusätzlich in einer Drehrichtung DR um eine Drehachse DA, welche quer zur Aufwickelachse AA ausgerichtet ist. Dabei dreht sich die die Aufwickelwalze 9 mit derselben Winkelgeschwindigkeit wie die Schneideinheit 7.

Im Ausführungsbeispiel der Figuren 1 und 2 werden die zugeführten Verstärkungsfasern VF in Form wenigstens eines längs verstärkten flächigen Textilmaterials TM zugeführt. Unter einem längs verstärkten textilen Flächengebilde TM wird dabei ein Gebilde verstanden, welches Verstärkungsfasern VF aufweist, welche in Längsrichtung des Gebildes verlaufen und quer dazu mittels der Polymermatrix miteinander verbunden sind. Die Zuführeinrichtung 2 umfasst eine Abwickelwalze 6, welche in einer Abwickelrichtung AR um eine Abwickelachse WA rotiert, um so das textile Flächenmaterial TM mit den Verstärkungsfasern VF kontinuierlich zu liefern. In diesem Fall kann der Schlauch S dadurch geformt werden, dass das flächige Textilmaterial TM ein- oder beidseitig eingeschlagen wird, so dass die seitlichen Ränder des flächigen Textilmaterials TM zusammengeführt werden. Das Verfestigen des Schlauchs S kann sich in diesem Fall auf den Bereich der zusammengeführten Ränder beschränken. Um eine gleichmäßige Wandstärke des Schlauchs S zu erhalten, können die beiden Ränder ohne Überlappung zusammengeführt und im Schritt c) miteinander verbunden werden. Denkbar ist aber auch, dass das flächige Textilmaterial TM an seinen Rändern dünner ist als in einem mittleren Bereich. Hier kann dann eine Überlappung der Ränder vorgesehen sein, was das Verbinden der Ränder im Schritt c) vereinfachen kann. Beispielsweise können die Ränder durch Spreizen und Doublieren, also Übereinanderlegen, verbunden werden.

Vorteilhafterweise werden die Schritte a), b), c) und d) bei in einer fortlaufenden Bewegung FB bewegten Verstärkungsfasern durchgeführt. Das bedeutet, dass die Verstärkungsfasern VF während der Durchführung des Verfahrens kontinuierlich ohne Pausen von Schritt zu Schritt geführt werden. Dabei weist die Bewegungsgeschwindigkeit der Verstärkungsfasern bei jedem der Schritte a), b), c), d) zumindest annähernd denselben Wert auf, um so einen Materialstau bzw. einen unerwünschten Verzug der Verstärkungsfasern VF zu vermeiden. Auf diese Weise wird eine aufwändige zwischenzeitliche Lagerung der Verstärkungsfasern VF vermieden und das Halbzeug HZ kann mit hoher Geschwindigkeit hergestellt werden.

Nach einer bevorzugten Weiterbildung der Erfindung wird im Schritt c) die Verfestigung durch Verkleben der Verstärkungsfasern VF, durch Verschmelzen der Verstärkungsfasern VF, durch Befeuchten der Verstärkungsfasern VF, durch Begasen der Verstärkungsfasern VF, durch Vernähen der Verstärkungsfasern VF und/oder durch Aufbringen einer, insbesondere textilen, Verstärkungsschicht durchgeführt.

Das Verkleben kann durch Kaltkleben, bei dem ein Kleber bei Raumtemperatur eine stoffschlüssige adhäsive Verbindung zwischen den Verstärkungsfasern VF erzeugt, und/oder durch Heißkleben, bei dem ein Kleber erhitzt wird und beim Abkühlen eine stoffschlüssige adhäsive Verbindung zwischen den Verstärkungsfasern VF erzeugt, erfolgen.

Sofern die Verstärkungsfasern VF zum Verschweißen geeignet sind, kann die Verfestigung ebenso durch Verschweißen erfolgen, wobei die Verstärkungsfasern VF zumindest teilweise bis zur Verflüssigungsgrenze erhitzt werden, so dass sie beim Erstarren fest miteinander verbunden sind.

Ebenso kann die Verfestigung durch Befeuchten der Verstärkungsfasern VF erfolgen, in dem eine Flüssigkeit auf die Verstärkungsfasern VF aufgetragen wird. Beispielsweise ist es möglich, mittels einer geeigneten Flüssigkeit eine auf den Verstärkungsfasern VF anhaftende Avivage zumindest teilweise zu verflüssigen, so dass beim anschließenden Trocknen der Avivage eine Verbindung der Verstärkungsfasern VE erreicht wird.

Weiterhin kann das Verfestigen durch Begasen der Verstärkungsfasern VF erfolgen, in dem ein geeignetes Gas auf die Verstärkungsfasern VF aufgebracht wird. So ist es auch möglich, mittels eines geeigneten Gases eine auf den Verstärkungsfasern FV anhaftende Avivage zumindest teilweise zu verflüssigen, so dass beim anschließenden Verfestigen der Avivage eine Verbindung der Verstärkungsfasern VF erreicht wird.

Auch kann die Verfestigung durch Vernähen durchgeführt werden, worunter verstanden wird, dass die Verstärkungsfasern VF mittels eines Fadens zusammengehalten werden.

Darüber hinaus kann das Verfestigen auch durch Aufbringen einer, insbesondere textilen, Verstärkungsschicht erfolgen.

Bevorzugt umfassen die zugeführten Verstärkungsfasern VF Glasfasern, Kohlenstofffasern und/oder Aramidfasern. Derartige Materialien erfüllen die Anforderungen an Verstärkungsfasern VF, insbesondere hinsichtlich ihrer Festigkeit, sind weiterhin preiswert und gut verarbeitbar. Es sind aber auch andere Hochmodulfasern möglich.

In einer Ausgestaltung der Erfindung umfassen die zugeführten Verstärkungsfasern VF verdrehte Stapelfasern. Formteile, welche Verstärkungsfasern VF in Form von verdrehten Stapelfasern enthalten, weisen quer zur Hauptrichtung der Verstärkungsfasern VF eine höhere Festigkeit auf, als solche Formteile, welche mit Verstärkungsfasern in Form von Endlosfasern, auch Filamente genannt, gefertigt sind. Insbesondere kann so bei Formteilen, welche mehrere Schichten umfassen, der Zusammenhalt der einzelnen Schichten verbessert werden.

Zudem weisen Hybridgarne mit Stapelfasern einen geringeren Hohlraumanteil als Hybridgarne mit Endlosfasern auf, was die Gefahr von unerwünschten Lufteinschlüssen beim Formen des Formteils, also beim Konsolidieren des textilen Flächengebildes, verringert. Auf diese Weise wird die Festigkeit des Formteils verbessert.

Weiterhin sind aus Stapelfasern gefertigte Halbzeuge HZ besser drapierbar als ihre Pendants aus Filamenten. Hierdurch erleichtert sich das faltenfreie Einlegen der textilen Flächengebilde in das Formwerkzeug, wobei gleichzeitig die Gefahr einer Beschädigung der Struktur des Halbzeugs HZ verringert wird. Auf diese Weise können die Herstellkosten des Formteils gesenkt werden. Zudem können so aus Halbzeugen HZ komplexer geformte Formteile hergestellt werden, da sich die Halbzeuge HZ besser an die Kontur des Formwerkzeugs anlegen lassen.

Weiterhin wird durch die Verwendung von Stapelfasern die Gefahr verringert, dass die Fasern bei der Weiterverarbeitung, insbesondere beim Drapieren, geknickt werden. Dies wiederum ist vorteilhaft für die Festigkeit des späteren Formteils.

In einer anderen Ausgestaltung der Erfindung umfassen die zugeführten Verstärkungsfasern VF Endlosfasern. Formteile, welche Verstärkungsfasern VF in Form von Endlosfasern enthalten, weisen längs zur Hauptrichtung der Verstärkungsfasern VF eine höhere Festigkeit auf, als solche Formteile, welche mit Verstärkungsfasern VF in Form von verdrehten Stapelfasern gefertigt sind. Wenn nun die Verstärkungsfasern VF so angeordnet werden, dass deren Längsrichtung LRV zumindest abschnittsweise einer Hauptbelastungsrichtung des späteren Formteils entspricht, so kann das Formteil mechanischen Belastungen besser standhalten. Auf diese Weise kann das Verhältnis von mechanischer Belastbarkeit und Gewicht des Formteils verbessert werden.

In einer Ausgestaltung der Erfindung sind die zugeführten Verstärkungsfasern VF mit thermoplastischen Matrixfasern innig vermischt oder mit thermoplastischen Matrixfasern ummantelt. Auf diese Weise entsteht eine Schicht SVS eines Halbzeugs HZ, welches sowohl die Verstärkungsfasern VF als auch die Polymermatrix in Form von thermoplastischen Matrixfasern enthält. Hierdurch vereinfacht sich das Verfahren, da die Polymermatrix nicht nachträglich eingebracht werden muss. Das spätere Herstellen des Formteils kann dann in einfacher Weise so erfolgen, dass das Halbzeug HZ in einer Formeinrichtung bis zur Schmelze der thermoplastischen Matrixfasern erhitzt wird, so dass sich das Halbzeug HZ der Formeinrichtung exakt anpassen kann, und dass sich das Halbzeug HZ beim Abkühlen verfestigt, so dass das fertige Formteil entsteht.

Unter einer innigen Mischung von Fasern verschiedener Arten wird dabei eine solche Mischung verstanden, bei der auf der Ebene der Einzelfasern eine im Wesentlichen homogene Mischung vorliegt. Das bedeutet, dass die Fasern der verschiedenen Arten so durchmischt sind, dass Gruppierungen von ausschließlich gleichartigen Fasern im Wesentlichen nicht mehr auftreten. Durch die Verwendung von innigen Mischungen bzw. von mit thermoplastischen Matrixfasern ummantelten Verstärkungsfasern VF ist sichergestellt, dass in dem Halbzeug HZ die thermoplastischen Matrixfasern und die Verstärkungsfasern VF durchmischt sind. Auf diese Weise kann erreicht werden, dass die Verstärkungsfasern VF beim Aufschmelzen der thermoplastischen Matrixfasern vollständig benetzt werden, so dass im späteren Formteil die Wechselwirkungen zwischen thermoplastischer Matrix und den Verstärkungsfasern VF durch eine verbesserte stoffschlüssige Verbindung maximiert werden, so dass ein mechanisch hoch belastbares Formteil mit gleichzeitig geringem Gewicht geschaffen ist.

Bevorzugt umfassen die thermoplastischen Matrixfasern Polyurethanfasern (insbesondere Fasern aus PU), Polyamidfasern (insbesondere Fasern aus PA), Polyetherketonfasern (insbesondere Fasern aus PAEK sowie aus seinen Abkömmlingen, insbesondere PEEK, PEK, PEEEK, PEEKEK, PEKK), Polypropylenfasern (insbesondere Fasern aus PP), Acrynitril-Butadien-Styrol-Fasern (insbesondere Fasern aus ABS) und/oder Polyesterfasern (insbesondere Fasern aus PES sowie aus seinen Abkömmlingen, insbesondere PBT, PC, PET, PEN). Derartige Materialien erfüllen insbesondere die Anforderungen hinsichtlich ihrer Festigkeit, sind preiswert und gut verarbeitbar.

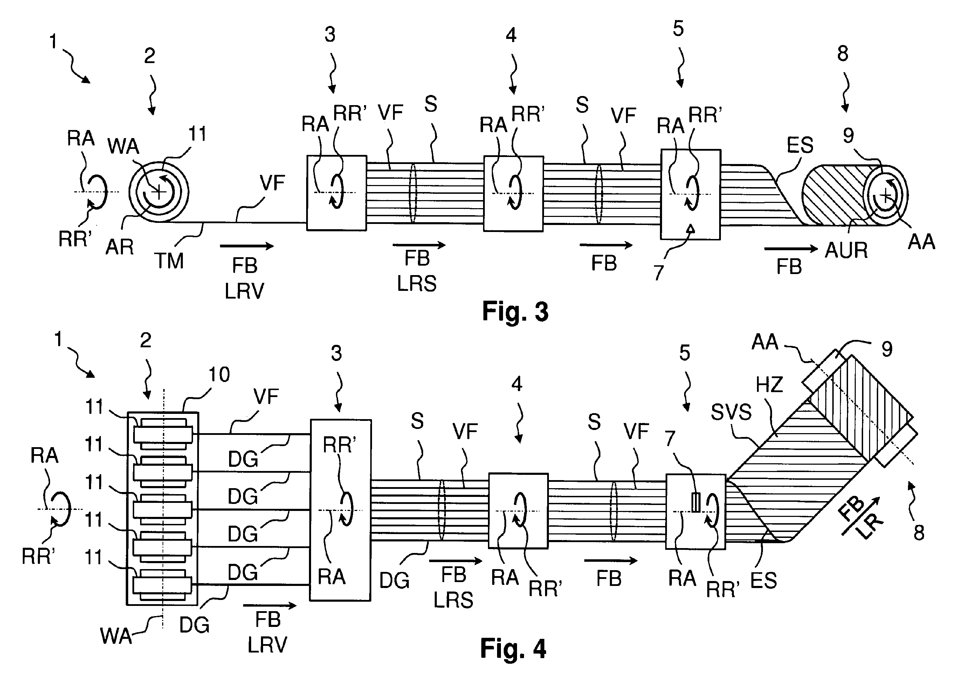

Die Figuren 3 und 4 zeigen ein zweites Ausführungsbeispiel einer erfindungsgemäßen Vorrichtung 1 zur Durchführung eines Verfahrens zur Herstellung eines endlosen Halbzeugs HZ zur Herstellung von Formteilen. Dabei werden im Folgenden lediglich die Unterschiede zum ersten Ausführungsbeispiel erläutert. Insbesondere können beim zweiten Ausführungsbeispiel, soweit nicht ausdrücklich ausgeschlossen, sämtliche Merkmale des ersten Ausführungsbeispiels vorgesehen sein.

Beim zweiten Ausführungsbeispiel werden die zugeführten Verstärkungsfasern VF in Form von diskreten Garnen DG zugeführt. Hierzu weist die Zuführeinrichtung 2 ein Spulengatter 10 auf, welches eine Vielzahl von Ablaufspulen 11 aufweisen kann. Auf diese Weise müssen die Verstärkungsfasern VF im Schritt c) zwar am ganzen Umfang des Schlauchs S verfestigt werden, allerdings können so Ungleichmäßigkeiten im Bereich der aneinandergefügten Ränder eines aus einem textilen Flächengebildes TM gebildeten Schlauchs S vermieden werden, was die Gleichmäßigkeit der Polymermatrix und/oder der Verstärkungsfasern VF im späteren Halbzeug HZ verbessert.

Weiterhin wird im zweiten Ausführungsbeispiel der Schlauch S während des Schritts d) um seine Längsachse RA gedreht. In diesem Fall kann der endlose Schnitt ES mit einer feststehenden Schneideinheit 7 erzeugt werden und das Halbzeug HZ kann in einer Ebene aus der Schlauchschneidvorrichtung 5 abgezogen werden. Hierdurch erleichtert sich sowohl ein gegebenenfalls vorgesehenes Aufwickeln des Halbzeugs, da die Aufwickelwalze 9 sich nun lediglich um die Aufwickelachse AA drehen muss als auch ein gegebenenfalls vorgesehenes Verbinden der schräg verstärkten Schicht mit weiteren fortlaufend gelieferten Schichten.

Um den Schlauch im Schritt d) zu drehen, können die Zuführeinrichtung 2, der Schlauchformer 3, die Verfestigungseinrichtung 4 und die Schlauchschneidevorrichtung 5 (mit Ausnahme der Schneideinheit 7) jeweils um ein Rotationsachse RA in einer Rotationsrichtung RR' rotieren.

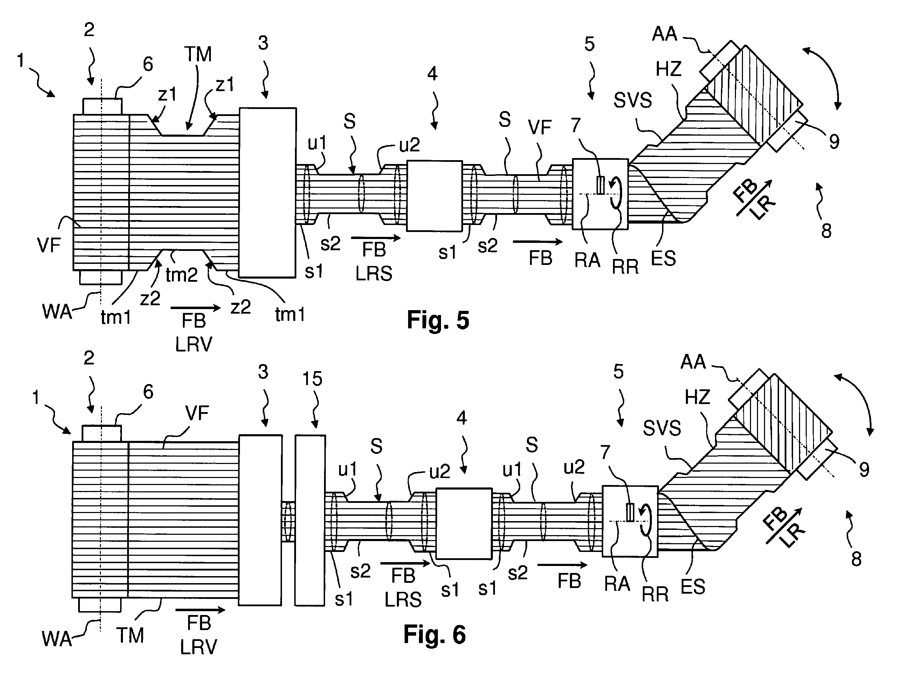

Die Figuren 5-7 zeigen verschiedene Ausführungsformen zur Herstellung eines breitenvariablen endlosen Halbzeugs zur Herstellung von Formteilen. Insbesondere können bei diesen Ausführungsbeispielen, soweit nicht ausdrücklich ausgeschlossen, sämtliche Merkmale der vorhergehenden Ausführungsbeispiele vorgesehen sein.

Bei dem dritten Ausführungsbeispiel, das in der Figur 5 in Aufsicht dargestellt ist, wird eine Polymermatrix mit den darin eingebetteten Verstärkungsfasern VF, die zusammen das längs verstärkte flächige Textilmaterial TM bilden, in entlang der besagten Längsrichtung unterschiedlichen Breiten dem Schlauchformer 3 zugeführt. Gemäß dem nur schematisch dargestellten Ausführungsbeispiel der Figur 5 wird das flächige Textilmaterial TM in Form von aufeinander folgenden Abschnitten tm1 und tm2 zugeführt, die voneinander verschiedene Breiten aufweisen. Das mit dieser Geometrie dem Schlauchformer 3 zugeführte Textilmaterial TM wird - vorzugsweise bei in Schlauchumfangsrichtung stets gleicher Überlappung der Ränder der Polymermatrix bzw. des Textilmaterials TM - zu einem Schlauch S mit Abschnitten s1 und s2 geformt, die entsprechend unterschiedliche Schlauchdurchmesser aufweisen. Zwischen den Schlauchabschnitten s1, s2 entstehen durch die Schlauchformung Übergangsbereiche u1, u2.

Das breitenvariable Textilmaterial TM, das vorliegend von der Polymermatrix und den darin eingebetteten Verstärkungsfasern VF gebildet ist, kann bevorzugt durch temporäre Zufuhr von randseitigen Zusatzbahnen z1, z2 (s. Fig. 5) - ebenfalls vorzugsweise bestehend aus Polymermatrix und Verstärkungsfasern VF - zu einer Textilmaterialbahn, die eine konstante Breite aufweist, realisiert werden. Die letztgenannte, zentrale Textilmaterial-Bahn mit konstanter Breite, welche kontinuierlich zugeführt wird, definiert die minimale Breite des dem Schlauchformer 3 zugeführten Textilmaterials, die durch die Zufuhr der Zusatzbahnen z1, z2 von einer oder beiden Seiten her vergrößert werden kann. Die Zusatzbahnen z1, z2 werden vorliegend mit einem Anschnitt von ca. 45° zugeführt, um einen kontinuierliche Schlauchbildung zu ermöglichen. In der Figur 5 stellt der Textilmaterialabschnitt tm2 das zentrale Textilmaterial dar, während in den Abschnitten tm1 jeweils von beiden Seiten zusätzliches Textilmaterial in Form von Zusatzbahnen z1, z2 temporär, d.h. mit Unterbrechungen, zugeführt wird. Die nur zeitweilig zugeführten Zusatzbahnabschnitte z1, z2, die beispielsweise von zusätzlichen Gattern (hier nicht dargestellt) abgezogen werden können, können in einem nicht dargestellten Zusatzschritt mit der Textilmaterialbahn konstanter Breite verbunden werden, bevor sie zusammen dem Schlauchformer 3 zugeführt werden.

Anstelle eines Textilmaterials TM, das von einer Polymermatrix mit eingebetteten Verstärkungsfasern VF gebildet ist, können Verstärkungsfasern VF (einschließlich solcher für die Zusatzbahnen z1, z2) auch in Form von diskreten Garnen DG zugeführt werden (s.o.). Für die beschriebene Breitenvarianz des Halbzeugs können dann beispielsweise von einer oder beiden Seiten bzw. Rändern zusätzliche diskrete Garne DG definierter Länge von zusätzlichen Spulengattern abgezogen werden und den endlosen (und zentralen) Verstärkungsfasern zugeführt werden.

Alternativ zu einer temporären Zufuhr von Zusatzbahnen z1, z2 können Einschnitte an den Übergängen tm1 zu tm2 bzw. tm2 zu tm1 quer zur Richtung FB vorhanden sein, die entweder schon im von der Zuführeinrichtung 2 abzuwickelnden Textilmaterial TM realisiert vorliegen oder in einer nicht dargestellten Schneideeinrichtung, die vor dem Schlauchformer 3 angeordnet ist, eingebracht werden. Hierdurch können randseitige Zuschnitte des Textilmaterials TM vorgenommen werden, um Breitenvariationen des Textilmaterials TM vor Zufuhr in den Schlauchformer 3 zu realisieren.

In der Figur 5 ist schematisch dargestellt, wie die Konfiguration des dem Schlauchformer 3 zugeführten Textilmaterials TM diesen als Schlauch verlässt und anschließend - mit gleicher Geometrie, d.h. ebenfalls als Schlauch S mit den unterschiedlichen Abschnitten s1 und s2 - auch die Verfestigungseinrichtung. Das schräge Zerschneiden in der Schlauchschneidevorrichtung 5 liefert dann das in Figur 5 nur äußerst schematisch dargestellte resultierende Halbzeug mit einer Breitenvarianz in seiner Längsrichtung LR. Die Breitenvarianz wird in der Realität anders aussehen, als in der Figur 5 (und auch in der Figur 6, s.u.) dargestellt. Es soll an dieser Stelle nur deutlich werden, dass das Halbzeug mit einer variablen Breite herstellbar ist. Der genaue Verlauf und ein Versatz des gezeigten schmaleren Bereichs in Längsrichtung LR des Halbzeugs HZ sind nicht wiedergegeben.

Bei der vorgenannten Ausführungsform können die unterschiedlichsten Geometrien bzw. Breitenvariationen des dem Schlauchformer 3 zugeführten Textilmaterials TM realisiert werden. So können lediglich auf einer Randseite des Textilmaterials TM konvexe oder konkave Breitenvariationen vorgesehen sein, während die andere Randseite linear in Richtung FB verläuft. Gerade Schnitte oder geschwungene Kanten sind möglich, ebenso an beiden Rändern versetzt zueinander verlaufende Konturen mit nicht zur Richtung FB parallelen Verläufen.

Gemäß dem vierten Ausführungsbeispiel, das in der Figur 6 dargestellt ist, wird ein Textilmaterial TM mit einheitlicher Breite dem Schlauchformer 3 zugeführt. Dieser stellt einen Schlauch S mit einem einheitlichen Durchmesser her, wobei dieser Schlauch S in einer nachfolgenden, an sich bekannten Aufblaseinrichtung 15 von innen her in verschiedenen Abschnitten unterschiedlich aufgeweitet wird. In der Figur 6 ist angedeutet, dass in den Abschnitten s1 eine größere Aufweitung erfolgt als im dazwischen liegenden Abschnitt s2. Insgesamt kann beispielsweise eine Schlauchgeometrie erhalten werden, die der beispielhaften Geometrie des dritten Ausführungsbeispiels ähnelt (vgl. Figuren 5 und 6). Zusätzlich oder alternativ kann auch eine Unterdruckeinrichtung vorgesehen sein, mittels welcher der Durchmesser des Schlauchs S gegenüber seinem Normaldurchmesser reduziert werden kann (auch dies ist in der Figur 6 mit dem Bezugszeichen 15 angedeutet). Die Verfestigung des Schlauchs S mit den unterschiedlichen Durchmessern erfolgt anschließend in der Verfestigungseinrichtung 4. Durch den endlosen Schnitt ES wird wiederum ein Halbzeug HZ mit variabler Breite erhalten. Wie zur Figur 5 ausgeführt, ist die Form des Halbzeugs HZ nur äußerst schematisch wiedergegeben. Beispielsweise wird beim Schnitt durch die Übergangsbereiche u1, u2 in der Realität ein asymmetrischer Verlauf des Halbzeugs HZ erhalten, der vorliegend nicht dargestellt ist.

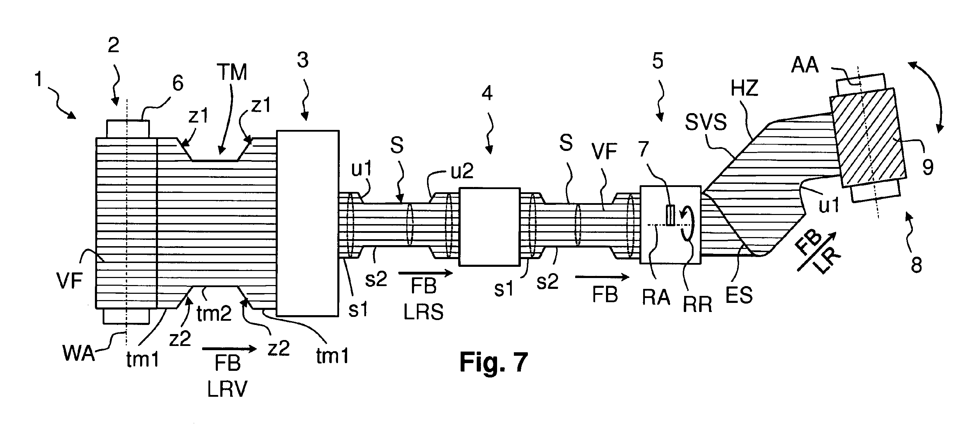

In der Figur 7 ist im rechten Bildteil dargestellt, welcher Kurvenverlauf bei einem Schnitt durch den Übergangsbereich u1 resultieren könnte. Der hier dargestellte gebogene Verlauf des Halbzeugs HZ ergibt sich - in äußerst schematischer Darstellung, die auch hier lediglich groben Verdeutlichungszwecken dient - aus einem Schnitt durch den Übergangsbereich u1 von einem Schlauchabschnitt s1 mit größerem Schlauchdurchmesser (ergibt einen breiteren Abschnitt des Halbzeugs HZ) zu einem Schlauchabschnitt s2 mit kleinerem Schlauchdurchmesser (ergibt einen schmaleren Abschnitt des Halbzeugs HZ). Da durch diese Biegung eine Richtungsänderung des aufzuwickelnden Halbzeugs HZ resultiert, ist die Aufwickelwalze 9 verfahrbar, vorzugsweise schwenkbar, angeordnet, was durch den Doppelpfeil symbolisiert ist (dieser Doppelpfeil ist ebenfalls entsprechend in den Figuren 5 und 6 eingezeichnet, um zu symbolisieren, dass auch hier eine Verschwenkbarkeit der Aufwickelwalze 9 vorgesehen sein kann).

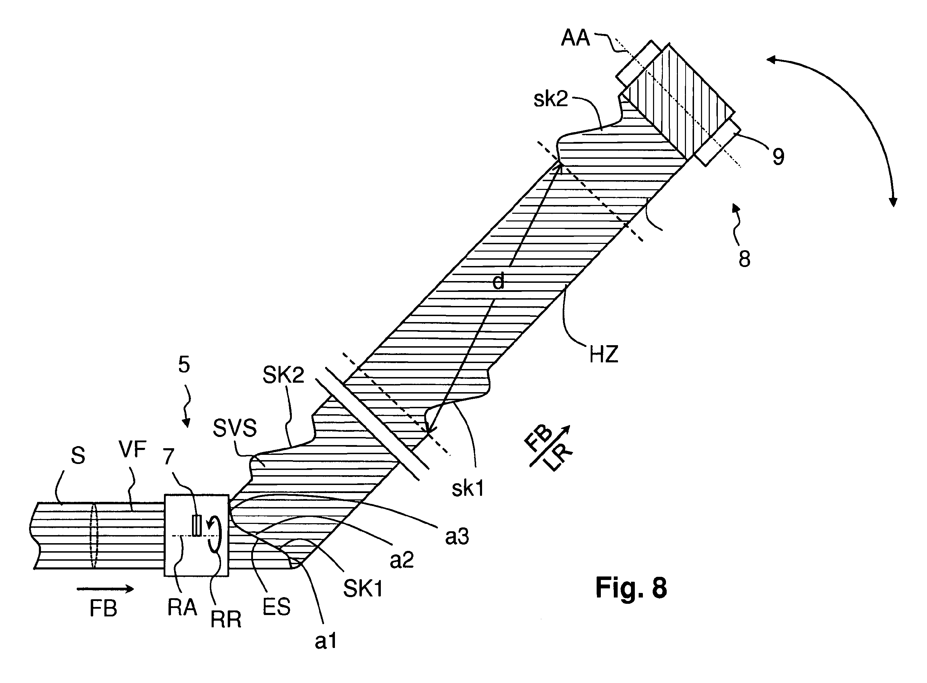

In dem Ausschnitt gemäß der Figur 8 ist ein weiteres Ausführungsbeispiel zur Erzeugung eines Halbzeugs HZ mit einer variablen Breite in seiner Laufrichtung LR dargestellt. Vorliegend wird ein Schlauch S mit konstantem Durchmesser in der Schlauchschneideeinrichtung nicht mit einem konstanten Steigungswinkel, sondern mit unterschiedlichen Steigungswinkeln zerteilt, so dass das Halbzeug HZ mit einer Breitenvarianz erhalten wird.

In der Aufsicht der Detailansicht der Fig. 8 ist lediglich die Schlauchschneidevorrichtung, der hier ein Schlauch S mit konstantem Durchmesser zugeführt wird, und die Wickeleinrichtung 8 gezeigt. Wie dargestellt wird vorliegend ein geschwungener Schnitt ES angesetzt, dessen Steigungswinkel zunächst in einem stromabwärtigen Abschnitt a1 relativ groß ist, dann in einem Abschnitt a2 abflacht und in einem dritten Abschnitt a3 wieder ansteigt. Die zu diesem Schnitt ES (nur ungefähr) korrespondierende und die der noch nicht abgewickelten Schnittkante SK1 gegenüberliegende Schnittkante SK2 des schon abgewickelten Halbzeugs ist ebenfalls in Figur 8 dargestellt.

Weiter stromabwärts der Schlauchschneidevorrichtung 5 ist angedeutet, wie sich die durch einen Schnitt ES entsprechend Figur 8 (die davor oder danach gesetzten Schnitte sind hier nicht berücksichtigt) entstehenden zwei Schnittkanten sk1 und sk2 (gestrichelt dargestellt) durch die Abwicklung räumlich in Laufrichtung LR des Halbzeugs HZ zueinander verhalten. Insbesondere ist ersichtlich, dass die beiden Schnittkanten sk1, sk2 in Laufrichtung LR den dargestellten Abstand d zueinander aufweisen.

In der Figur 8 ist der Einfachheit halber nicht dargestellt, dass durch die Veränderung des Steigungswinkels beim Schnitt eine Breitenzunahme bzw. eine Breitenabnahme des Halbzeugs HZ und eine Veränderung des Abzugswinkels resultiert. Wird der Steigungswinkel bspw. erhöht, wird eine Breitenzunahme erhalten. Die Aufwickelwalze muss also auch hier schwenkbar sein, was vorliegend durch den Doppelpfeil angedeutet ist (vgl. Figur 7).

Bei den Ausführungsbeispielen gemäß der Figuren 5-8 ist keine Drehung der Aufwickelwalze 9 zusätzlich in einer Drehrichtung DR um eine Drehachse DA vorgesehen; eine solche Aufwickelwalze 9 kann jedoch ohne Weiteres vorhanden sein.

Anhand der Ausführungsbeispiele der Figuren 5-8 wurde erläutert, wie durch Einstellung der Durchmesser und der Durchmesseränderungen sowie dem Steigungswinkel des Schnitts unterschiedlichste Geometrien des Halbzeugs realisiert werden können. Selbstverständlich sind auch Kombinationen der einzelnen oben aufgeführten Ausführungsbeispiele möglich.

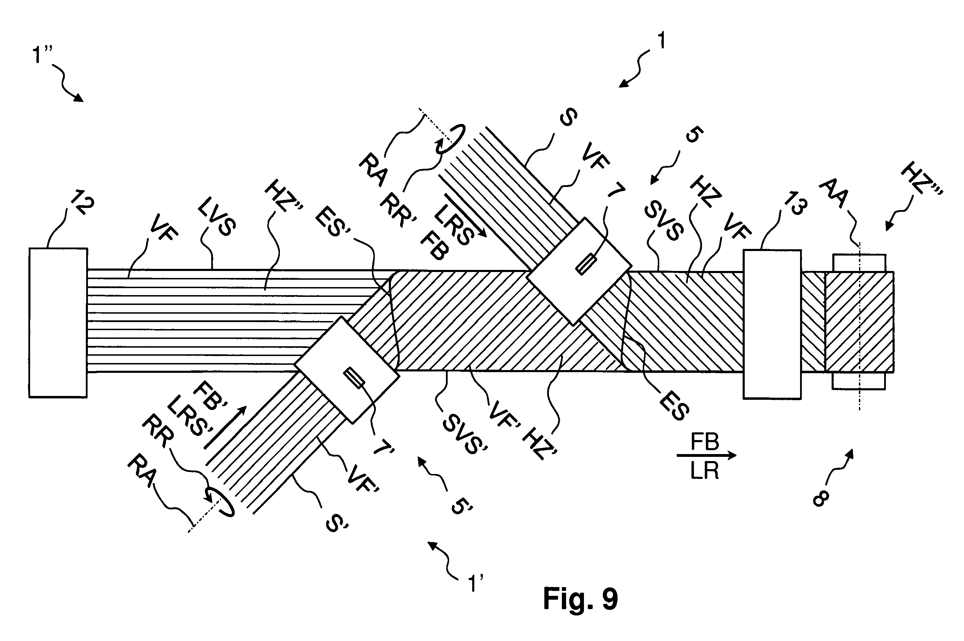

Die Figur 9 zeigt ein sechstes Ausführungsbeispiel einer erfindungsgemäßen Vorrichtung 1 " zur Durchführung eines Verfahrens zur Herstellung eines endlosen Halbzeugs HZ zur Herstellung von Formteilen. Dabei werden im Folgenden lediglich die Unterschiede zu den vorhergehenden Ausführungsbeispielen erläutert. Insbesondere können beim sechsten Ausführungsbeispiel, soweit nicht ausdrücklich ausgeschlossen, sämtliche Merkmale der vorhergehenden Ausführungsbeispiele vorgesehen sein.

Beim sechsten Ausführungsbeispiel wird im Anschluss an Schritt d) die fortlaufend gelieferte schräg verstärkte Schicht SVS mit mehreren weiteren zeitgleich fortlaufend gelieferten Schichten SVS', LVS mittels einer Verbindungseinrichtung 13 flächig verbunden. Hierdurch ist es möglich, in einer Produktionslinie mehrschichtige Halbzeuge HZ''' herzustellen, ohne die fortlaufend gelieferte schräg verstärkte Schicht SVS zwischenzeitlich lagern zu müssen.

Im sechsten Ausführungsbeispiel umfassen die weiteren fortlaufend gelieferten Schichten SVS', LVS eine weitere schräg verstärkte Schicht SVS', wobei vorzugsweise die Faserorientierung der schräg verstärkten Schicht SVS von der Faserorientierung der weiteren schräg verstärkten Schicht SVS' abweicht. Durch die Verwendung von mehreren Schichten SVS, SVS', LVS kann eine höhere Biegesteifigkeit beim fertigen Formteil erreicht werden. Wenn die verschiedenen schräg verstärkten Schichten SVS, SVS', LVS unterschiedliche Faserorientierungen aufweisen, kann zudem erreicht werden, dass das fertige Formteil in mehreren Richtungen zugfest ist.

Im sechsten Ausführungsbeispiel umfassen die weiteren fortlaufend gelieferten Schichten SVS', LVS eine längs verstärkte Schicht LVS, welche von einer Vorrichtung 12 zur fortlaufenden Lieferung einer längs verstärkten Schicht LVS fortlaufend geliefert wird. Wenn die schräg verstärkte Schicht SVS mit einer längs verstärkten Schicht LVS kombiniert wird, kann zudem erreicht werden, dass das fertige Formteil in mehreren Richtungen zugfest ist.

Die Vorrichtung 1" umfasst eine erste nur teilweise dargestellte Vorrichtung 1, welche oben anhand der Figuren 3 und 4 erläutert ist und eine erste schräg verstärkte Schicht SVS kontinuierlich liefert. Weiterhin ist eine zweite nur teilweise dargestellte Vorrichtung 1' vorgesehen, welche analog zur ersten Vorrichtung 1 aufgebaut ist und eine zweite schräg verstärkte Schicht SVS' kontinuierlich liefert. Bei der ersten Vorrichtung 1 rotiert der Schlauch S in der Rotationsrichtung RR' und bei der zweiten Vorrichtung 1' in der dazu entgegengesetzten Rotationsrichtung RR. Auf diese Weise wird bewirkt, dass sich bei der ersten schräg verstärkten Schicht SVS für die Ausrichtung der Verstärkungsfasern VF ein Winkel von +X° ergibt und dass sich bei der zweiten schräg verstärkten Schicht SVS' für die Ausrichtung der Verstärkungsfasern VF' ein Winkel von -X° ergibt.

Weiterhin ist eine Vorrichtung 12 zur fortlaufenden Lieferung einer längs verstärkten Schicht LVS vorgesehen. Die Vorrichtungen 1, 1' und 12 sind so angeordnet, dass die Schichten SVS, SVS' und LVS aneinander liegend mit gleicher Geschwindigkeit einer Verbindungseinrichtung 13 zugeführt werden können. Die Verbindungseinrichtung 13 verbindet die Schichten SVS, SVS' und LVS, so dass ein dreilagiges Halbzeug HZ''' entsteht.

Anstelle einer winkligen bzw. schrägen Zuführung der verschiedenen Halbzeuge HZ, HZ', HZ" relativ zueinander, können diese auch übereinander zusammengeführt werden, um ein mehrlagiges Halbzeug HZ''' herzustellen.

### Bezugszeichenliste

- 1: Vorrichtung zur Herstellung eines endlosen Halbzeugs zur Herstellung von Formteilen
- 2: Zuführeinrichtung
- 3: Schlauchformer
- 4: Verfestigungseinrichtung
- 5: Schlauchschneidevorrichtung
- 6: Abwickelwalze
- 7: Schneideinheit
- 8: Wickeleinrichtung
- 9: Aufwickelwalze
- 10: Spulengatter
- 11: Ablaufspule
- 12: Vorrichtung zur fortlaufenden Lieferung einer längs verstärkten Schicht
- 13: Verbindungseinrichtung
- 15: Aufblaseinrichtung und/oder Unterdruckeinrichtung

- HZ: Halbzeug
- SVS: schräg verstärkte Schicht
- VF: Verstärkungsfasern
- LR: Längsrichtung des Halbzeugs
- LRV: Längsrichtung der Verstärkungsfasern
- S: Schlauch
- LRS: Längsrichtung des Schlauchs
- ES: endloser Schnitt
- TM: längs verstärktes flächiges Textilmaterial
- AR: Abwickelrichtung
- WA: Abwickelachse
- RR: Rotationsrichtung
- RA: Rotationsachse, Längsachse
- AUR: Aufwickelrichtung
- AA: Aufwickelachse
- DR: Drehrichtung
- DA: Drehachse
- FB: fortlaufende Bewegung
- DG: diskretes Garn
- LVS: längs verstärkte Schicht
- z1: Zusatzbahn
- z2: Zusatzbahn
- tm1: Textilmaterialabschnitt
- tm2: Textilmaterialabschnitt
- s1: Schlauchabschnitt
- s2: Schlauchabschnitt
- u1: Übergangsbereich
- SK1: Schnittkante
- SK2: Schnittkante
- sk1: Schnittkante
- sk2: Schnittkante
- a1-a3: Abschnitte des Endlosschnitts ES

## Patentansprüche

1. Verfahren zur Herstellung eines endlosen Halbzeugs (HZ) zur Herstellung von Formteilen, wobei das Halbzeug (HZ) wenigstens eine schräg verstärkte Schicht (SVS) aufweist, welche eine Polymermatrix und darin eingebettete Verstärkungsfasern (VF) aufweist, wobei die Verstärkungsfasern (VS) der wenigstens einen schräg verstärkten Schicht (SVS) schräg zur Längsrichtung (LR) des Halbzeugs (HZ) verlaufen, **dadurch gekennzeichnet, dass** die wenigstens eine schräg verstärkte Schicht (SVS) durch folgende Schritte fortlaufend hergestellt wird:
a) Zuführen einer Vielzahl von Verstärkungsfasern (VF) in ihrer Längsrichtung (LRF) mittels einer Zuführeinrichtung (2) zu einem Schlauchformer (3),
b) Formen der zugeführten Verstärkungsfasern (VF) zu einem Schlauch (S) mittels des Schlauchformers (3), derart, dass die Verstärkungsfasern (VF) in Längsrichtung (LRS) des Schlauchs (S) verlaufen,
c) Verfestigen des die Verstärkungsfasern (VF) enthaltenden Schlauchs (S) in seiner Umfangsrichtung mittels einer Verfestigungseinrichtung (4), derart, dass der Schlauch (S) in seiner Form stabilisiert wird,
d) Zerschneiden des die Verstärkungsfasern (VS) enthaltenden und stabilisierten Schlauchs (S) mittels einer Schlauchschneidevorrichtung (5), derart, dass wenigstens ein endloser Schnitt (ES) schräg zur Umfangsrichtung des Schlauchs (S) erzeugt wird, so dass die schräg verstärkte Schicht (SVS) fortlaufend geliefert wird.

2. Verfahren nach dem vorhergehenden Anspruch, **dadurch gekennzeichnet, dass** die Schritte a), b), c) und d) bei fortlaufend bewegten Verstärkungsfasern (VF) durchgeführt werden.

3. Verfahren nach einem der vorhergehenden Ansprüche, **dadurch gekennzeichnet, dass** in Schritt c) die Verfestigung durch Verkleben der Verstärkungsfasern (VF), durch Verschmelzen der Verstärkungsfasern (VF), durch Befeuchten der Verstärkungsfasern (VF), durch Begasen der Verstärkungsfasern (VF), durch Vernähen der Verstärkungsfasern (VF) und/oder durch Aufbringen einer insbesondere textilen Verstärkungsschicht durchgeführt wird.

4. Verfahren nach einem der vorhergehenden Ansprüche, **dadurch gekennzeichnet, dass** die zugeführten Verstärkungsfasern (VF) Glasfasern, Kohlenstofffasern, Aramidfasern, verdrehte Stapelfasern und/oder Endlosfasern umfassen.

5. Verfahren nach einem der vorhergehenden Ansprüche, **dadurch gekennzeichnet, dass** die zugeführten Verstärkungsfasern (VF) mit thermoplastischen Matrixfasern innig vermischt oder mit thermoplastischen Matrixfasern ummantelt sind, wobei die thermoplastischen Matrixfasern vorzugsweise Polyurethanfasern, Polyamidfasern, Polyetherketonfasern, Polypropylenfasern, Acrynitril-Butadien-Styrol-Fasern und/oder Polyesterfasern umfassen.

6. Verfahren nach einem der vorhergehenden Ansprüche, **dadurch gekennzeichnet, dass** die zugeführten Verstärkungsfasern (VF) in Form wenigstens eines längs verstärkten flächigen Textilmaterials (TM) zugeführt werden.

7. Verfahren nach einem der vorhergehenden Ansprüche, **dadurch gekennzeichnet, dass** die zugeführten Verstärkungsfasern (VF) in Form von diskreten Garnen (DG) zugeführt werden.

8. Verfahren nach einem der vorhergehenden Ansprüche, **dadurch gekennzeichnet, dass** im Anschluss an Schritt d) die schräg verstärkte Schicht (SVS) mittels einer Wickeleinrichtung (8) aufgewickelt wird.

9. Verfahren nach einem der vorhergehenden Ansprüche, **dadurch gekennzeichnet, dass** der Schlauch (S) mit entlang seiner Längsrichtung (LRS) unterschiedlichen Durchmessern der Schlauchschneideeinrichtung (5) zugeführt wird, so dass das Halbzeug (HZ) mit einer Breitenvarianz erhalten wird.

10. Verfahren nach dem vorhergehenden Anspruch, **dadurch gekennzeichnet, dass** die unterschiedlichen Durchmesser dadurch erhalten werden, dass die Verstärkungsfasern (VF) in entlang der besagten Längsrichtung (LRS) mit variierender Gesamtbreite dem Schlauchformer (3) zugeführt werden.

11. Verfahren nach einem der beiden vorhergehenden Ansprüche, **dadurch gekennzeichnet, dass** die unterschiedlichen Durchmesser des Schlauches (S) erhalten werden, indem der geformte Schlauch entlang seiner Längsrichtung in Bezug auf seinen Umfang unterschiedlich stark aufgeweitet und/oder komprimiert wird.

12. Verfahren nach einem der vorhergehenden Ansprüche, **dadurch gekennzeichnet, dass** der wenigstens eine endlose Schnitt (ES) schräg zur Umfangsrichtung des Schlauchs (S) mit unterschiedlichen Steigungswinkeln erzeugt wird, so dass das Halbzeug (HZ) mit einer Breitenvarianz erhalten wird.

13. Verfahren nach einem der vorhergehenden Ansprüche, **dadurch gekennzeichnet, dass** im Anschluss an Schritt d) die fortlaufend gelieferte schräg verstärkte Schicht (SVS) mit einer oder mehreren weiteren zeitgleich fortlaufend gelieferten Schichten (SVS, SVS', LVS) mittels einer Verbindungseinrichtung (13) flächig verbunden wird.

14. Verfahren nach einem der vorhergehenden Ansprüche, **dadurch gekennzeichnet, dass** die weiteren fortlaufend gelieferten Schichten (SVS', LVS) eine weitere schräg verstärkte Schicht umfassen (SVS'), wobei vorzugsweise die Faserorientierung der schräg verstärkten Schicht (SVS) von der Faserorientierung der weiteren schräg verstärkten Schicht (SVS') abweicht.

15. Verfahren nach einem der vorhergehenden Ansprüche, **dadurch gekennzeichnet, dass** die weiteren fortlaufend gelieferten Schichten (SVS', LVS) eine längs verstärkte Schicht (LVS) umfassen, welche von einer Vorrichtung(12) zur fortlaufenden Lieferung einer längs verstärkten Schicht (LVS) fortlaufend geliefert wird.

16. Verfahren nach einem der vorhergehenden Ansprüche, **dadurch gekennzeichnet, dass** der Schlauch (S) während des Schrittes d) um seine Längsachse (RA) gedreht wird.

17. Vorrichtung zur Durchführung eines Verfahrens, insbesondere nach einem der vorstehenden Ansprüche, zur Herstellung eines endlosen Halbzeugs (HZ) zur Herstellung von Formteilen, wobei das Halbzeug (HZ) wenigstens eine schräg verstärkte Schicht (SVS) aufweist, welche eine Polymermatrix und darin eingebettete Verstärkungsfasern (VF) aufweist, wobei die Verstärkungsfasern (VF) der wenigstens einen schräg verstärkten Schicht (SVS) schräg zur Längsrichtung (LR) des Halbzeugs (HZ) verlaufen, **dadurch gekennzeichnet, dass** sie zum fortlaufenden Herstellen der wenigstens einen schräg verstärkten Schicht (SVS) folgende Bestandteile aufweist:
eine Zuführeinrichtung (2) zum Zuführen einer Vielzahl von Verstärkungsfasern (VF) in ihrer Längsrichtung zu einem Schlauchformer (3), wobei der Schlauchformer (3) zum Formen der zugeführten Verstärkungsfasern (VF) zu einem Schlauch (S) ausgebildet ist, derart, dass die Verstärkungsfasern (VF) in Längsrichtung (LRS) des Schlauchs (S) verlaufen,
eine Verfestigungseinrichtung (4) zum Verfestigen des die Verstärkungsfasern (VF) enthaltenden Schlauchs (S) in seiner Umfangsrichtung, derart, dass der Schlauch (S) in seiner Form stabilisiert ist und
eine Schlauchschneidevorrichtung (5) zum Zerschneiden des die Verstärkungsfasern enthaltenden und verfestigten Schlauchs (S), derart, dass wenigstens ein endloser Schnitt (ES) schräg zur Umfangsrichtung des Schlauchs(S) erzeugbar ist, so dass die schräg verstärkte Schicht (SVS) fortlaufend lieferbar ist.

18. Vorrichtung nach dem vorhergehenden Anspruch, **dadurch gekennzeichnet, dass** sie eines oder mehrere der folgenden Merkmale umfasst:
- eine Einrichtung zum Zuführen von Zusatzbahnen (z1, z2) von Verstärkungsfasern (VF) zur Erzeugung eines Schlauches (S) mit variablem Durchmesser; und/oder
- eine Einrichtung (15), insbesondere eine Aufblaseinrichtung und/oder eine Unterdruckeinrichtung und/oder ein Ringformer, zum Aufweiten und/oder Verringern des Durchmessers des Schlauchs (S); und/oder
- eine Einrichtung zum Drehen des Schlauches (S) um seine Längsachse; und/oder
- eine Rotationseinrichtung zum Rotieren der Schneideinheit (7); und/oder
- eine schwenkbare Wickeleinrichtung (8), insbesondere eine schwenkbare Aufwickelwalze (9), zum Aufwickeln des fortlaufend gelieferten Halbzeugs (HZ).

## Claims

1. Method for manufacturing a continuous semi-finished product (HZ) to produce shaped parts, whereby the semi-finished product (HZ) has at least one obliquely reinforced layer (SVS) that has a polymer matrix and reinforcing fibers (VF) embedded therein, in which case the reinforcing fibers (VS) of the at least one obliquely reinforced layer (SVS) run obliquely to the longitudinal direction (LR) of the semi-finished product (HZ), **characterized in that** the at least one obliquely reinforced layer (SVS) is continuously manufactured through the following steps:
a) Feeding many reinforcing fibers (VF) in their longitudinal direction (LRF) to a hose former (3) by means of a feeding device (2),
b) Forming the reinforcing fibers (VF) that were fed to become a hose (S) by means of the hose former (3), in such a way that the reinforcing fibers (VF) run in longitudinal direction (LRS) of the hose (S),
c) Solidifying the hose (S) that contains the reinforcing fibers (VF) in its circumferential direction by means of a solidification machine (4), in a way to stabilize the form of the hose (S),
d) Cutting up the stabilized hose (S) containing the reinforcing fibers (VS) with a hose-cutting machine (5), in such a way that at least one endless cut (ES) is generated obliquely to the circumferential direction of the hose (S), so that the obliquely reinforced layer (SVS) is supplied continuously.

2. Method according to the previous claim, **characterized in that** steps a), b), c), and d) are carried out during the continuous movement of the reinforcing fibers (VF).

3. Method according to one of the previous claims, **characterized in that** in step c), solidification takes place through gluing the reinforcing fibers (VF), through fusing the reinforcing fibers (VF), through wetting the reinforcing fibers (VF), through gassing the reinforcing fibers (VF), through sewing up the reinforcing fibers (VF) and/or through applying especially a textile reinforcement layer.

4. Method according to one of the previous claims, **characterized in that** the supplied reinforcing fibers (VF) include glass fibers, carbon fibers, aramid fibers, twisted staple fibers and/or continuous fibers.

5. Method according to one of the previous claims, **characterized in that** the supplied reinforcing fibers (VF) are deeply mixed with thermoplastic matrix fibers or are enveloped with thermoplastic matrix fibers, in which case the thermoplastic matrix fibers are preferably polyurethane fibers, polyamide fibers, polyetherketone fibers, polypropylene fibers, acrylonitril-butadien-styrene fibers and/or polyester fibers.

6. Method according to one of the previous claims, **characterized in that** the reinforcing fibers (VF) are supplied in form of at least one longitudinally reinforced flat textile material (TM).

7. Method according to one of the previous claims, **characterized in that** the supplied reinforcing fibers (VF) are supplied in form of discrete yarns (DG).

8. Method according to one of the previous claims, **characterized in that** after completion of step d), the obliquely reinforced layer (SVS) is wound up by means of a winding machine (8).

9. Method according to one of the previous claims, **characterized in that** the hose (S) with different diameters along its longitudinal direction (LRS) is fed to the hose-cutting machine (5) to obtain the semi-finished product (HZ) with varying widths.

10. Method according to the previous claim, **characterized in that** the different diameters are obtained by supplying the reinforcing fibers (VF) with varying overall width to the hose former (3) along said longitudinal direction (LRS).

11. Method according to one of the two previous claims, **characterized in that** the different diameters of the hose (S) are obtained by varying the degree of expansion and/or compression of the formed hose along its longitudinal direction with regard to its circumference.

12. Method according to one of the previous claims, **characterized in that** the at least one endless cut (ES) is made obliquely to the circumferential direction of the hose (S) with different angles of inclination, so that the semi-finished product (HZ) is obtained with varying widths.

13. Method according to one of the previous claims, **characterized in that** after step d) has been completed, the continuously supplied obliquely reinforced layer (SVS) is joined face to face with one or several additional layers (SVS, SVS', LVS) supplied continuously and simultaneously by means of a joining device (13).

14. Method according to one of the previous claims, **characterized in that** the further continuously supplied layers (SVS', LVS) include an additional obliquely reinforced layer (SVS'), whereas preferably the fiber orientation of the obliquely reinforced layer (SVS) differs from the fiber orientation of the additional obliquely reinforced layer (SVS').

15. Method according to one of the previous claims, **characterized in that** the additional continuously supplied layers (SVS', LVS) include one longitudinally reinforced layer (LVS) that is supplied continuously by a device (12) for the continuous supply of a longitudinally reinforced layer (LVS).

16. Method according to one of the previous claims, **characterized in that** the hose (S) is rotated around its longitudinal axis (RA) during step d).

17. Device for implementing a method, particularly according to one of the preceding claims, for manufacturing a continuous semi-finished product (HZ) to produce shaped parts, in which case the semi-finished product (HZ) has at least one obliquely reinforced layer (SVS) that has a polymer matrix and reinforcing fibers (VF) embedded therein, wherein the reinforcing fibers (VF) of the at least one obliquely reinforced layer (SVS) run obliquely to the longitudinal direction (LR) of the semi-finished product (HZ), **characterized in that** it contains the following components for the continuous manufacturing of the at least one obliquely reinforced layer (SVS):
a feeding device (2) for supplying a large number of reinforcing fibers (VF) in their longitudinal direction to a hose former (3), in which case the hose former (3) is configured to form the supplied reinforcing fibers (VF) to become a hose (S) in such a way that the reinforcing fibers (VF) run in longitudinal direction (LRS) of the hose (S),
a solidification machine (4) for solidifying the hose (S) containing the reinforcing fibers (VF) in its circumferential direction in a way to stabilize the form of the hose (S), and
a hose-cutting machine (5) for cutting up the solidified hose (S) containing the reinforcing fibers so that at least one endless cut (ES) can be made obliquely to the circumferential direction of the hose (S), so that the obliquely reinforced layer (SVS) can be continuously supplied.

18. Device according to the preceding claim, **characterized in that** it includes one or several of the following characteristics:
- an equipment for feeding additional webs (z1, z2) of reinforcing fibers (VF) to generate a hose (S) with variable diameter; and/or
- an equipment (15), especially a blowing device and/or a negative pressure equipment and/or a ring former, for expanding and/or reducing the diameter of the hose (S); and/or
- an equipment for turning the hose (S) around its longitudinal axis; and/or
- a rotation equipment for rotating the cutting unit (7); and/or
- a swiveling winding machine (8), especially a swiveling winding roller (9), for winding up the continuously supplied semi-finished product (HZ).

## Revendications

1. Procédé pour fabriquer un produit semi-fini sans fin (HZ) pour la fabrication de pièces moulées, dans lequel le produit semi-fini (HZ) présente au moins une couche renforcée en oblique (SVS), qui comporte une matrice polymère et des fibres de renforcement (VF) qui y sont incorporées, sachant que les fibres de renforcement (VS) de l'au moins une couche renforcée en oblique (SVS) s'étendent en oblique par rapport au sens longitudinal (LR) du produit semi-fini (HZ), **caractérisé en ce que** l'au moins une couche renforcée en oblique (SVS) est fabriquée en continu selon les étapes suivantes :
a) alimentation, à un dispositif à former des tubes (3), d'une multitude de fibres de renforcement (VF) dans leur sens longitudinal (LRF) au moyen d'un dispositif d'alimentation (2),
b) formage des fibres de renforcement (VF) alimentées en un tube (S) au moyen du dispositif à former des tubes (3), de sorte que les fibres de renforcement (VF) s'étendent dans le sens longitudinal (LRS) du tube (S),
c) stabilisation du tube (S) contenant les fibres de renforcement (VF) dans son sens circonférentiel au moyen d'un dispositif de stabilisation (4), de sorte que le tube (S) soit stabilisé dans sa forme,
d) coupe du tube (S) stabilisé et contenant les fibres de renforcement (VS) au moyen d'un dispositif de coupe de tubes (5), de sorte que soit générée au moins une coupe sans fin (ES) en oblique par rapport au sens circonférentiel du tube (S), de sorte que la couche renforcée en oblique (SVS) soit livrée en continu.

2. Procédé selon la revendication précédente, **caractérisé en ce que** les étapes a), b), c) et d) sont exécutées lors de mouvements continus des fibres de renforcement (VF).

3. Procédé selon l'une des revendications précédentes, caractérisé en ce qu'à l'étape c), la stabilisation est effectuée par collage des fibres de renforcement (VF), par fusion des fibres de renforcement (VF), par humidification des fibres de renforcement (VF), par gazage des fibres de renforcement (VF), par couture des fibres de renforcement (VF) et/ou par application d'une couche de renforcement en particulier textile.

4. Procédé selon l'une des revendications précédentes, **caractérisé en ce que** les fibres de renforcement (VF) alimentées contiennent des fibres de verre, des fibres de carbone, des fibres aramides, des fibres discontinues torsadées et/ou des fibres sans fin.

5. Procédé selon l'une des revendications précédentes, **caractérisé en ce que** les fibres de renforcement (VF) alimentées sont intimement mélangées avec des fibres matricielles thermoplastiques ou enveloppées par des fibres matricielles thermoplastiques, sachant que les fibres matricielles thermoplastiques contiennent de préférence des fibres polyuréthanes, des fibres polyamides, des fibres de polyéther cétone, des fibres de polypropylène, des fibres d'acrylonitrile-butadiène-styrène et/ou des fibres de polyester.

6. Procédé selon l'une des revendications précédentes, **caractérisé en ce que** les fibres de renforcement (VF) alimentées sont alimentées sous la forme au moins d'une matière textile (TM) plane renforcée longitudinalement.

7. Procédé selon l'une des revendications précédentes, **caractérisé en ce que** les fibres de renforcement (VF) alimentées sont alimentées sous la forme de fils discontinus (DG).

8. Procédé selon l'une des revendications précédentes, caractérisé en ce qu'à la suite de l'étape d), la couche renforcée en oblique (SVS) est enroulée au moyen d'un dispositif d'enroulement (8).

9. Procédé selon l'une des revendications précédentes, **caractérisé en ce que** le tube (S) est alimenté au dispositif (5) de coupe de tubes avec des diamètres différents le long de son sens longitudinal, de sorte que le produit semi-fini (HZ) soit obtenu avec une variabilité en largeur.

10. Procédé selon la revendication précédente, **caractérisé en ce que** les différents diamètres sont obtenus du fait que les fibres de renforcement (VF) sont alimentées au dispositif à former les tubes (3) avec des largeurs totales variant le long dudit sens longitudinal (LRS).

11. Procédé selon l'une des deux revendications précédentes, **caractérisé en ce que** les différents diamètres du tube (S) sont obtenus du fait que le tuyau formé est élargi et/ou comprimé à des degrés différents le long de son sens longitudinal par rapport à son étendue circonférentielle.

12. Procédé selon l'une des revendications précédentes, **caractérisé en ce que** l'au moins une coupe sans fin (ES) est générée avec des angles d'obliquité différents par rapport au sens circonférentiel du tube (S), de sorte que le produit semi-fini (HZ) soit obtenu avec une variabilité en largeur.

13. Procédé selon l'une des revendications précédentes, caractérisé en ce qu'à la suite de l'étape d), la couche renforcée en oblique (SVS) livrée en continu est reliée par sa surface avec une ou plusieurs couches (SVS, SVS', LVS) supplémentaires livrées simultanément et en continu, au moyen d'un dispositif de réunion (13).

14. Procédé selon l'une des revendications précédentes, **caractérisé en ce que** les couches supplémentaires livrées en continu (SVS', LVS) comprennent une couche renforcée en oblique (SVS') supplémentaire, sachant que, de préférence, l'orientation des fibres de la couche renforcée en oblique (SVS) diffère de l'orientation des fibres de la couche renforcée en oblique (SVS') supplémentaire.

15. Procédé selon l'une des revendications précédentes, **caractérisé en ce que** les couches livrées en continu (SVS', LVS) supplémentaires comprennent une couche renforcée longitudinalement (LVS), qui est livrée en continu par un dispositif (12) pour la livraison continue d'une couche renforcée longitudinalement (LVS).

16. Procédé selon l'une des revendications précédentes, **caractérisé en ce que** le tube (S) est tourné sur son axe longitudinal (RA) durant l'étape d).

17. Dispositif pour exécuter un procédé, en particulier selon l'une des revendications précédentes, pour fabriquer un produit semi-fini sans fin (HZ) pour la fabrication de pièces moulées, dans lequel le produit semi-fini (HZ) présente au moins une couche renforcée en oblique (SVS), qui comporte une matrice polymère et des fibres de renforcement (VF) qui y sont incorporées, sachant que les fibres de renforcement (VF) de l'au moins une couche renforcée en oblique (SVS) s'étendent en oblique par rapport au sens longitudinal (LR) du produit semi-fini (HZ), caractérisé en ce qu'il présente les composants suivants pour la fabrication continue de l'au moins une couche renforcée en oblique (SVS) :
un dispositif d'alimentation (2) pour l'alimentation, à un dispositif à former des tubes (3), d'une multitude de fibres de renforcement (VF) dans leur sens longitudinal, sachant que le dispositif à former les tubes (3) se présente sous une forme pour former en un tube (S) les fibres de renforcement (VF) alimentées, de sorte que les fibres de renforcement (VF) s'étendent dans le sens longitudinal (LRS) du tube,
un dispositif de stabilisation (4) pour stabiliser le tube (S) contenant les fibres de renforcement (VF) dans son sens circonférentiel, de sorte que le tube (S) soit stabilisé dans sa forme et
un dispositif de coupe du tube (5) pour la coupe du tube (S) contenant les fibres de renforcement (VS) et stabilisé, de sorte que puisse être générée au moins une coupe sans fin (ES) en oblique par rapport au sens circonférentiel du tube (S), de manière à ce que la couche renforcée en oblique (SVS) puisse être livrée en continu.

18. Dispositif selon la revendication précédente, caractérisé en ce qu'il présente une ou plusieurs des caractéristiques suivantes :
- un dispositif pour alimenter des pans supplémentaires (z1, z2) de fibres de renforcement (VF) pour générer un tube (S) avec un diamètre variable ; et/ou
- un dispositif (15), en particulier un dispositif de gonflage et/ou un dispositif de dépression et/ou un dispositif de formage annulaire, pour élargir et/ou réduire le diamètre du tube (S) ; et/ou
- un dispositif pour torsader le tube (S) autour de son axe longitudinal ; et/ou
- un dispositif de rotation pour faire tourner l'unité de coupe (7) ; et/ou
- un dispositif d'enroulement (8) pivotant, en particulier un rouleau d'enroulement (9), pour l'enroulement du produit semi-fini (HZ) livré en continu.
